# EUROPEAN PATENT SPECIFICATION

(11) **EP 1 192 063 B1**
(45) Date of publication and mention of the grant of the patent: **12.01.2005**
(21) Application number: 00948599.6
(22) Date of filing: 07.07.2000
(51) Int. Cl.: B60P 3/05, B60R 21/06

(54) **LOAD RETAINING BARRIER NET FOR MOTOR VEHICLE**
SPERRNETZ FÜR KRAFTFAHRZEUGE
FILET DE RETENUE D'UNE CHARGE POUR VEHICULE AUTOMOBILE

(30) Priority: 08.07.1999 US 142782 P
(43) Date of publication of application: 03.04.2002
(73) Proprietor: Polytech Netting, L.P., Troy, Michigan 48083 (US)
(72) Inventor: MOORE, Donal, Birmingham, MI 48009 (US)
(74) Representative: Church, Simon John
(86) International application number: PCT/US2000/018693
(87) International publication number: WO 2001/003973

(56) References cited:
- EP-A- 0 642 955
- EP-A- 0 995 641
- DE-A- 4 410 681
- DE-A- 19 641 794
- DE-C- 19 711 868
- DE-C- 19 735 463
- DE-U- 29 704 724
- FR-A- 2 768 102
- US-A- 5 186 587
- US-A- 5 288 122
- US-A- 5 427 486
- US-A- 5 437 474
- US-A- 5 551 726
- US-A- 5 772 370
- US-A- 5 820 187
- US-A- 5 954 380
- US-A- 6 099 222

## Description

### BACKGROUND OF THE INVENTION

The present invention relates generally to load retention nets for use in automotive vehicles, and more particularly to a removable barrier net which extends between the top of a passenger seat and the interior of the vehicle roof.

Governments around the world are beginning to recognize the need for automotive safety standards for passengers above and beyond such items as passive passenger restraint systems. For example, recently the United Nations and European communities began imposing laws in which automobile manufacturers must attempt to provide a safe environment for passengers while traveling with minimum loads of 10 Kg to 100 Kg. This weight should be restrained by a restraint mechanism during frontal impacts at 50 km/h, with approximate maximum deflection of the restraint mechanism being about 300 mm or less. The minimum force this would generate during such an impact is quite high. As such, the above-mentioned lawmakers are hoping to see means by which high G-force loads are restrained from entering the passenger compartments of motor vehicles such as station wagons, sport utilities, mini vans and other motor vehicles, including passenger vehicles having fold-down rear seats.

In addition, consumers continually seek more efficient, convenient and versatile ways to transport or store contents stowed in such a motor vehicle. One disadvantage of the traditional storage space in the above-mentioned motor vehicles is that stowage is freely movable within the storage compartment, and can be damaged during transport and/or in the event of a sudden stop or impact.

Attempts have been made to answer the above-mentioned needs. One such attempt is found in U.S. Patent No. 4,919,467 issued to Guimelli. This patent discloses a vehicle safety screen having a tubular metal peripheral frame traversed by a heavy wire mesh. The frame is mounted to four vehicle anchorage points via rearwardly projecting upper metal securing straps. The ends of the straps adjacent the anchorage points are attached thereto by a securing bolt extending transversely through the strap end, a cover plate, the vehicle body panel and a mounting plate, and is engaged within a captive nut.

The Guimelli patent answers the safety need relatively satisfactorily; however, the heavy wire mesh and tubular metal frame are aesthetically displeasing. Further, specific tools must be used to attach and/or detach the device, and such attachment/detachment can be time consuming and difficult. Still further, if the securing bolt is not properly engaged (which could be difficult to determine), the device could detach in the event of a crash; and, due to the heaviness of the device, the device itself could cause injury. Further, in the event of a sudden stop, the sound of items striking the heavy wire mesh would be quite loud, and the items could be damaged after impacting the wire mesh. Yet still further, if the device were not needed, due to the difficulty in removing it, the consumer may leave it installed although undesired. Even if it were removed, due to its bulkiness, storage of it within the motor vehicle would be limited to laying it flat on the floor, thereby taking up valuable storage space and being subject to noisy movement during transport.

U.S. Patent No. 3,891,263 issued to Orsulak discloses a safety shield and compartmentalizer wherein the vehicle rear seat is modified to hold a cylindrical container having a flexible, opaque panel adapted to be pulled out of the container through a longitudinal slot in the container and outward from a transverse slot defined in the upper rear portion of the rear seat back rest. The panel is pulled from a retracted position and fastened to the rear wall or roof of the vehicle. The panel is retracted by an electric motor or a conventional window shade apparatus.

The Orsulak patent answers the safety need somewhat; however, it appears that the attachment means would not be load restraining in the event of a frontal impact as described above --a simple "window shade apparatus" or electric motor may not prevent further opaque panel from paying out, thereby allowing cargo to travel farther than desired, which may result in injury to passengers. Further, although the Orsulak device may be considered more aesthetically pleasing than the Guimelli device, it is not practical for installation in a motor vehicle. Even if feasible (given the strict weight limits, design specifications, passenger compartment space constraints, etc. for motor vehicles), it would be very expensive and difficult to develop and/or modify tooling to include such a cylindrical container, panel retracting motor and/or window shade apparatus defined within the rear seat. Still further, if the device were not included as a OEM option it would be very difficult, ifnot impossible, to include it as an after market option.

U.S. Patent no. 5, 772,370 issued to Moore discloses a safety net apparatus for a station wagon in accordance with the pre-characterizing portion of claim 1. The apparatus described includes a net which is generally rectangular and extends across an open space between a cargo area and a passenger compartment. Attaching means are disposed at each corner of the net to secure the net to the vehicle. Tension means are provided to ensure that the net is rendered taut.

Thus, it is an object of the present invention to provide a barrier net which will satisfactorily restrain loads from entering the passenger compartment of a motor vehicle during frontal impacts, thereby advantageously providing safety to passengers. It is a further object of the present invention to provide such a net which is aesthetically pleasing. It is another object of the present invention to provide such a net which is quickly attachable/detachable from its respective vehicle attachment areas, without the need for tools. It is a further object of the present invention to provide an attachment means for such a net, which attachment means is advantageously simple to discern if secure. It is a further object of the present invention to provide such a net which is easy to handle and compactable for storage. Further, it is an object of the present invention to provide such a net which is relatively inexpensive and simple to manufacture and install within the motor vehicle, and may be done either as an OEM option or as an after market option. Still further, it is an object of the present invention to provide such a net which is strong and resilient, yet lightweight. Further, it is an object of the present invention to provide a barrier net which may be easily removed from the vehicle, if desired. Yet further, it is an object of the present invention to provide such a barrier net which may be attached to the vehicle behind an operator's or passenger's seat to prevent cargo from moving forwardly into the occupied portion of the passenger compartment.

Accordingly, there is provided a load retaining barrier net apparatus for use with a motor vehicle having a cargo area, a passenger compartment, an interior roof, windows, a belt line, and at least one of an open space extending transversely to the vehicle between the cargo area and the passenger compartment above the belt line, and an open space extending transversely to the vehicle between a first row of seats and a second row of seats above the belt line, the barrier net apparatus including a netting member having a top, a bottom and two opposed sides, the apparatus also having first attaching means for removably attaching the top of the netting member to the vehicle and second attaching means for attaching the bottom of the netting member to the vehicle with the netting member extending across the at least one open space adjacent the belt line, and means for rendering the netting member taut to block the at least one open space, the first attaching means including a first coupling member and a second coupling member, the first and second coupling members being moveable relative to one another and adapted for engagement with corresponding coupling members mountable to the vehicle, the second attaching means including a third coupling member and a fourth coupling member moveable with respect to the netting member, characterized in that: a first rigid member supports the top of the netting member, the first coupling member and the second coupling member being located at opposite ends of the first rigid member such that the first rigid member maintains a minimum spacing between the first and second coupling members with respect to one another; and a second rigid member supports the bottom of the netting member, the third and fourth coupling members being engaged with the second rigid member.

Preferred features of the invention are to be found in the dependent claims.

### BRIEF DESCRIPTION OF THE DRAWINGS

Other objects, features and advantages of the present invention will become apparent by reference to the following detailed description and to the drawings, in which:
Fig. 1 is a partially cutaway perspective view, looking forwardly in a vehicle, of a first embodiment of a known barrier net and showing the net extending across an open area between a forward passenger area and a rear cargo area;
Fig. 1A is an enlarged view of an alternate embodiment of netting material for the net of Fig. 1;
Fig. 2A is a detail view showing an upper attachment means of the net of Fig. 1;
Fig. 2B is a detail view showing a lower attachment means of the net of Fig. 1;
Fig. 3A is an exploded perspective view of the attachment means and net tautening means shown in Fig. 2B;
Fig. 3B is a detail view of an alternate attachment means and net tautening means;
Fig. 3C is a detail view showing a further alternate attachment means and net tautening means;
Fig. 4 is a perspective view of an alternate embodiment of a net according to the invention;
Fig. 5 is an enlarged view of an alternate embodiment of netting material for the net of Fig. 4;
Fig. 6A is a partially cutaway, partially cross sectional, enlarged perspective view, showing an alternate embodiment of the net of Fig. 1 in accordance with the invention;
Fig. 6B is a partially cutaway, partially cross sectional, enlarged perspective view, showing, a bottom portion of the alternate embodiment of the net of Fig. 1 in accordance with the invention;
Fig. 7 is a cross sectional view taken on line 7-7 in Fig. 6A;
Fig. 8 is a view similar to Fig. 7 of an alternate embodiment of the guide member;
Fig. 9 is a view of yet another alternate embodiment the net of Fig. 1 in accordance with the invention;
Fig. 10 is an enlarged, partially cutaway cross sectional view taken on line 10-10 of Fig. 9;
Fig. 11 is a cross sectional view taken on line 11-11 of Fig. 9;
Fig. 12 is a, partially cutaway cross sectional view taken on line 12-12 of Fig. 9;
Fig. 13 is an enlarged bottom view as seen generally along line 13-13 of Fig. 9;
Fig. 14 is a partial perspective view of an alternative means for attaching and tautening the upper end of the net;
Fig. 15 is a perspective view of a plug and male member used in the embodiment of Fig. 14;
Fig. 16 is a partial perspective view of an alternative means for attaching and tautening the lower end of the net;
Fig. 17 is a yet another embodiment of a restraint net according to the present invention;
Fig. 18 is a detail of the upper support tube of Fig. 17;
Fig. 19 is a detail view of the upper attachment means of the net of Fig. 17;
Fig. 20 is a detail view showing an alternative upper attachment means;
Fig. 21 is a detail of a centrally located lever mechanism as used in the net according to Fig. 17; and
Fig. 22 is a perspective view of an alternative tautening means for the lower portion of the netting member.

### DETAILED DESCRIPTION OF THE PREFERRED EMBODIMENTS

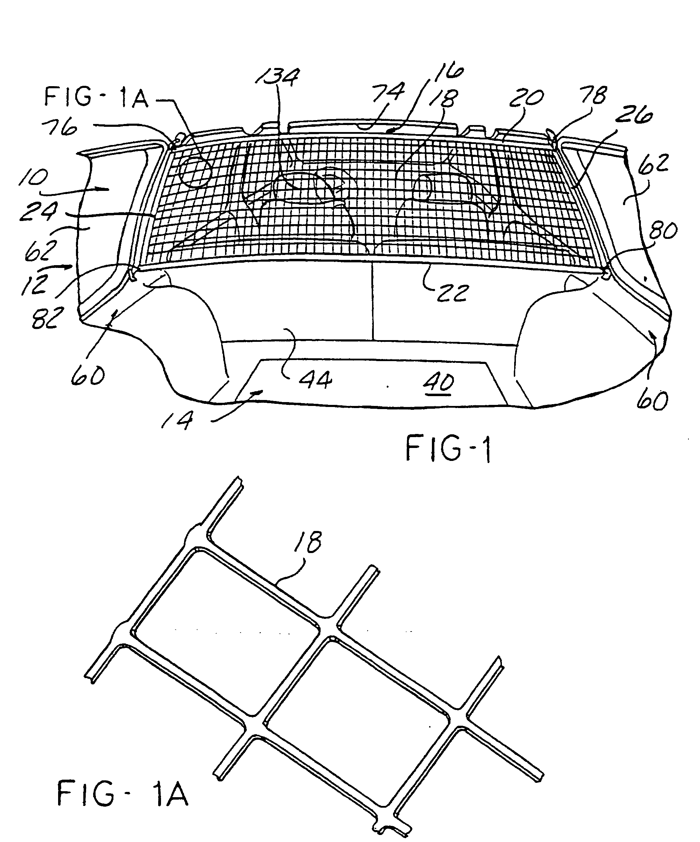

Referring to Fig. 1, a known barrier net is designated generally as 10. Barrier net 10 is for use within a motor vehicle 12, for example a station wagon or a sport utility vehicle, having a cargo area 14 located behind a seat back 44 and a passenger compartment 16 located forwardly of the seat back. An open space 74 extends transversely between the cargo area 14 and the passenger compartment 16 above the seat back 44, and the invention barrier net extends across the open space 74 to restrain stowage or cargo (not shown) within the cargo area 14 from entering the passenger compartment 16.

Barrier net 10 comprises a netting member 18 which is generally rectangular, trapezoidal or any shape suitable for substantially covering the open space 74 above the seat back 44, and has a top 20, a bottom 22 and two opposed sides 24,26. The netting member 18 is removably secured to the interior of the vehicle 12 such that two upper corners 76,78 of the netting member are adjacent the interior roof (not shown) of the vehicle and the upper edge of the window 62, and two lower corners 80,82 are slightly behind the top edge of the seat back 44 and approximately even with the lower edge of the window 62. The horizontal lines extending along either side of the interior of the vehicle 12 at a height approximately even with the lower edge of the window 62 are hereinafter referred to as the belt line 60.

It is to be understood that the netting member 18 may be formed from any suitable natural or synthetic material and by any suitable process. However, in the preferred embodiment, the netting member 18 comprises a lightweight, resilient and strong synthetic material selected from the group consisting of coated polyesters, multifilament polypropylenes, nylons, and mixtures thereof. Further, in the preferred embodiment, the netting member 18 is formed by at least one of woven, knitted, rochelle, and weft insertion processes. Netting member 18 may alternately comprise a flexibly rigid, extruded polymeric material such as engineered plastics, as shown in Fig. 1A. In either the preferred or alternate embodiment, it may be preferable for the netting member 18 to be of a very small mesh size, eg. from about a 1 mm mesh to about a 2 mm mesh. This small mesh size is easily seen through and may cause less eye fatigue than a mesh of a larger size may cause. Further, the small mesh may add strength to the netting member 18 in that there is more material per square centimeter than with a larger mesh.

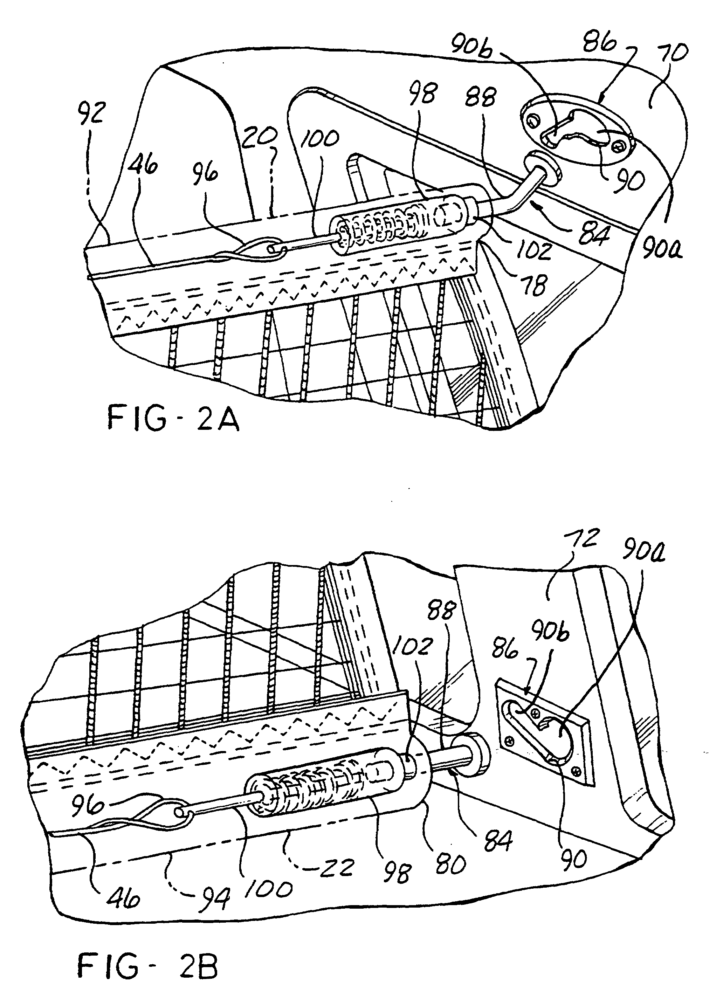

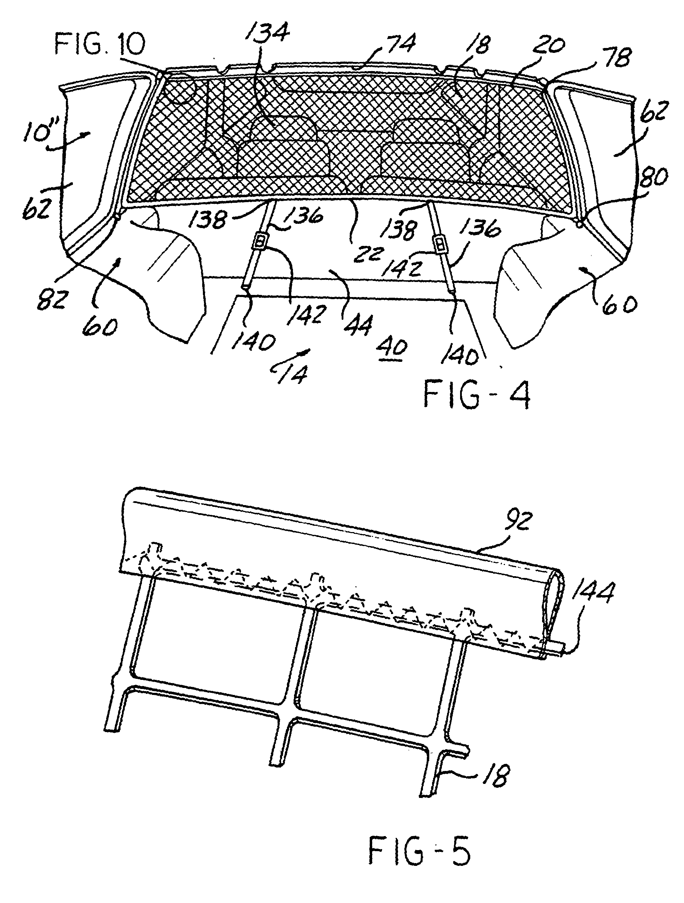

In the first embodiment as best seen in Figs. 2A and 2B, a first sleeve 92 is attached to the netting member top 20 along substantially the entire length thereof, and a second sleeve 94 is attached to the netting member bottom 22. The sleeves 92, 94 may be formed of any suitable material, but in the preferred embodiment are formed from polyester or nylon web strap, or a woven vinyl material. The upper and lower sleeves 92, 94 may be formed from a web strap material having heavy denier threads which may act as a rip stop (lock stitch) so as to prevent the sleeves 92, 94 ripping open at the sewn seams. The sleeves 92, 94 must be securely attached to the netting member. This may be accomplished in any number of ways including, as shown in Fig. 5, by sewing the weft 144 of the netting member 18 into the lower edge of the sleeve 92.

A load-rated cord 46 extends longitudinally within each of the sleeves 92, 94. The cords 46 may be formed of any suitable material which exhibits high tensile strength and low stretch, and by any suitable process. In the preferred embodiment, cords 46 comprise any one of the following: web strap formed from at least one of nylon, polyester, polypropylene and the like; and/or braid on braid cord formed from at least one of nylon, polyester, polypropylene and the like; and/or twisted cable formed from at least one of galvanized or stainless steel and the like. Of these, most preferred are web strap and/or braid on braid cord.

Four spring-loaded tension apparatuses 98 are provided, one disposed within each end of the sleeves 92, 94. Each tension apparatus 98 has a first end 100 operatively attached to an end 96 of one of the cords 46, and a second end 102 attached to a male projection 88 which extends longitudinally out the end of the sleeve. The tension apparatuses 98 function to urge the male projections 88 inwardly relative to the cords 46.

Female coupling members 86 are secured to the interior of the vehicle 12 adjacent the positions where the corners 76,78,80,82 of the netting member are to be retained. Each female coupling member 86 defines a key slot 90 having a circular portion 90a and an elongated portion 90b extending therefrom toward the front of the vehicle 12. The male projections 88 have enlarged, flange-like ends 84 matingly engageable with the female coupling members 86. As shown in Fig. 2A, the male projections 88 at the upper corners of the barrier net 10 may be crooked or curved somewhat in order to properly engage a female coupling member 86 which is located on the roof interior above the end of the net.

The male projections 88 and female coupling members 86 combine to provide an attachment means which is sturdy, yet is quick and easy for one person to attach to and detach from the vehicle 12 without need for special tools. Once removed from attachment to the vehicle 12, the netting member 18 may be easily rolled, folded or the like for easy and compact storage.

In addition to tautening the netting member 18, the spring loaded tension apparatus 98 may further function to absorb some of the shock experienced during a sudden stop or impact. Still further, apparatus 98 aids the consumer in attaching/detaching barrier net 10 quickly and easily. The taut rendering means also may enhance the aesthetics of net 10 by keeping the netting member 18 from sagging.

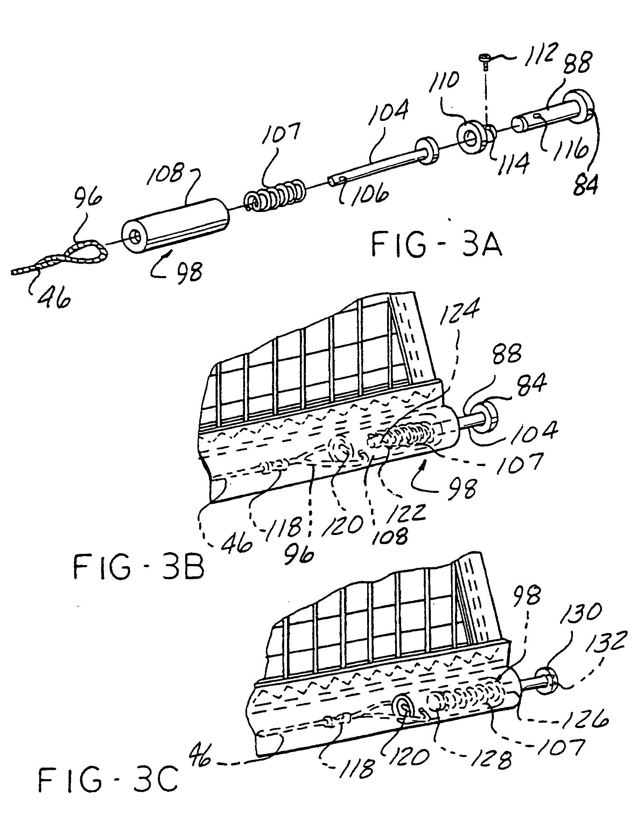

Alternate embodiments of the taut rendering means are shown in Figs. 3A-3C. Fig. 3A is an exploded view of the mechanism shown in Fig. 2B. Cord end 96 is attached to spring retainer rod 104 via throughbore 106. Spring 107 is retained by rod 104 within cylinder 108. Cylinder cap 110 is bonded to cylinder 108, and attachment rod/male projection 88 is attached to cap 110 via screw 112 and threaded bores 114, 116. In Fig. 3B, cord 46 has a crimped-on cable clip 118 to form a loop, and end 96 is attached to cylinder 108 via cable sleeve 120. In lieu of clip 118, cord 46 could terminate in a sewn loop. Spring 107 is retained by retainer pin 122 via throughbore 124 located in male projection 88. In Fig. 3C, a retainer rod 126 retains spring 107 within cylinder 108 via annular flange 128. Retainer rod 126 has a smooth shaft with a threaded end 132 located distally from the annular flange 128. The threaded end 132 is threadingly engaged within end cap 130. Any of the above taut rendering means components may be formed of any suitable materials and by any suitable process. Components such as cylinder 108, cap 110, rods 104, 126, etc. may be formed of engineered plastic and/or metal; however, in the preferred embodiment, these components are formed from engineered plastic.

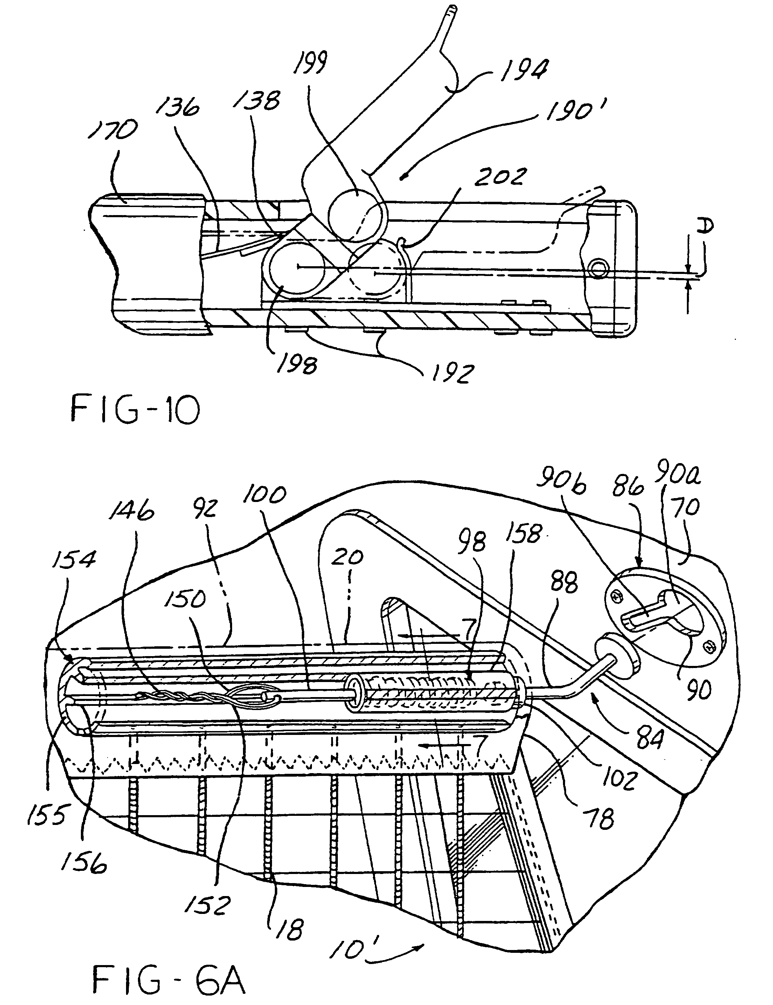

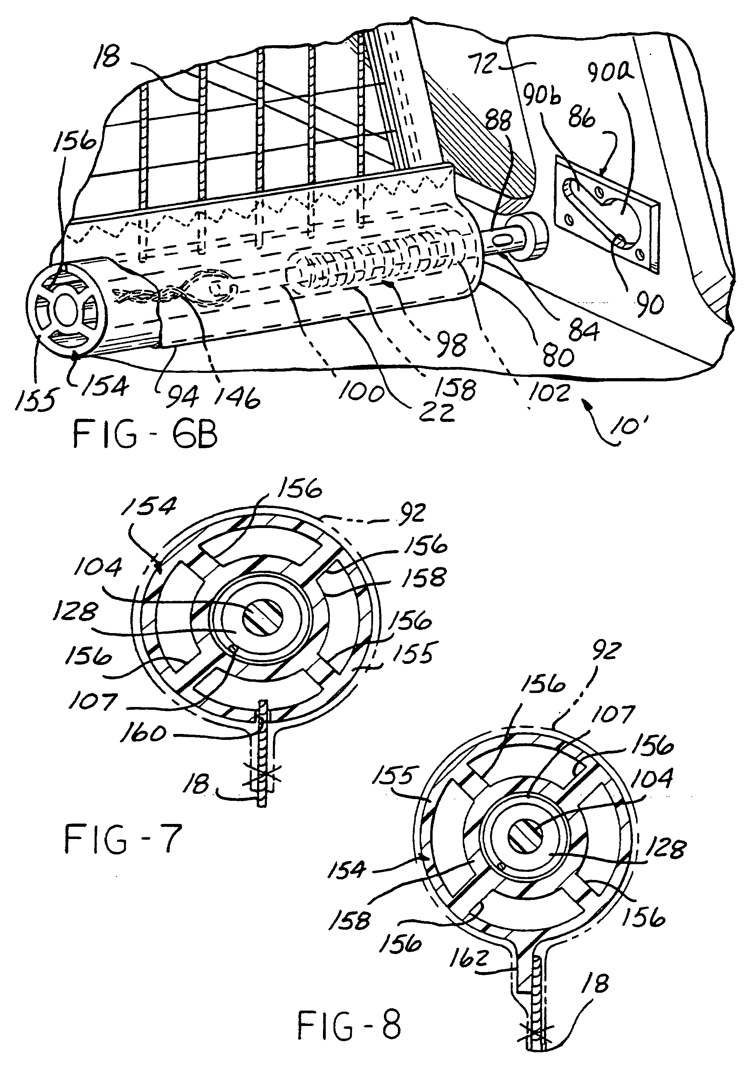

An alternate embodiment of the taut rendering means for a barrier net 10' in accordance with the invention is shown in Figs. 6A and 6B. This embodiment includes upper and lower sleeves 92,94 as described hereinabove, and four spring loaded tension apparatuses 98 which, with the exception of the following, are substantially as described hereinabove. In the barrier net 10' of this embodiment, cylinder 108 of the previously described embodiment is replaced by a hollow guide member 154 extending longitudinally through each of the sleeves 92,94. Guide member 154 has a generally tubular outer wall 155 and has at least one positioning web 156 formed integrally therewith and projecting radially inward. A hollow inner housing 158 is integrally formed with the positioning web(s) 156, the inner housing being adapted to contain and position the spring loaded tension apparatuses 98. It is to be understood that the guide members 154 may be formed from any suitable material and by any suitable method, such as a polymeric material, metal or any other suitably rigid material. However, in the preferred embodiment, these components are formed from engineered plastic. The guide member 154 itself need not be designed to withstand the large loads caused by a vehicle impact, since the cord 46 is engineered to bear the loads applied to the netting member.

The taut rendering means further comprises an energy absorbing cord 146 extending longitudinally within each guide member 154. By "energy absorbing cord," it is meant that cord 146 has a controlled amount of strength and a known amount of shock/impact/energy absorption. It is to be understood that any suitable energy absorbing cord 146 may be used. However, in the preferred embodiment, the energy absorbing cord 146 is formed from tightly wound metal wire. This wire may be formed from any suitable metal, including but not limited to galvanized steel, stainless steel or the like. Still more preferred is that cord 146 be formed from at least two or more strands 150, 152, as best seen in Fig. 6A, and is preferably wound at least four turns/inch.

Energy absorbing cord 146 is adapted to absorb energy during an impact, thereby helping to maintain the integrity of barrier net 10' and aiding in prevention of stowage entering the passenger compartment. During an impact, the wound cord 146 will unravel as it absorbs energy and, once deflected in this manner, the cord 146 and/or net 10' would have to be replaced.

Figs. 7 and 8 depict two alternate embodiments for attaching netting member 18 to the guide member 154. In Fig. 7, netting member 18 is operatively attached to guide member 154 through a groove 160 extending longitudinally along the guide member 154. In Fig. 8, netting member 18 is operatively attached to and positioned along guide member 154 by outwardly extending projection 162 extending longitudinally along the guide member 154.

An alternate embodiment of the bottom attachment means and taut rendering means for a barrier net 10'' is shown in Fig. 4. In this embodiment, the taut rendering means comprises at least one strap 136 having an upper end 138 attached to the bottom 22 of the netting member, and a lower end 140 attached to the cargo floor 40 by any suitable means. It is to be understood that any number of straps 136 may be used as desired and/or necessitated by a particular end use. In the preferred embodiment, two straps 136 are used, as shown. The taut rendering means further comprises means for shortening the straps 136 until the netting member 18 is taut. It is to be understood that this shortening means may comprise any suitable means, however, in the embodiment shown in Fig. 4, this means comprises a belt-loop type tightening ring 142.

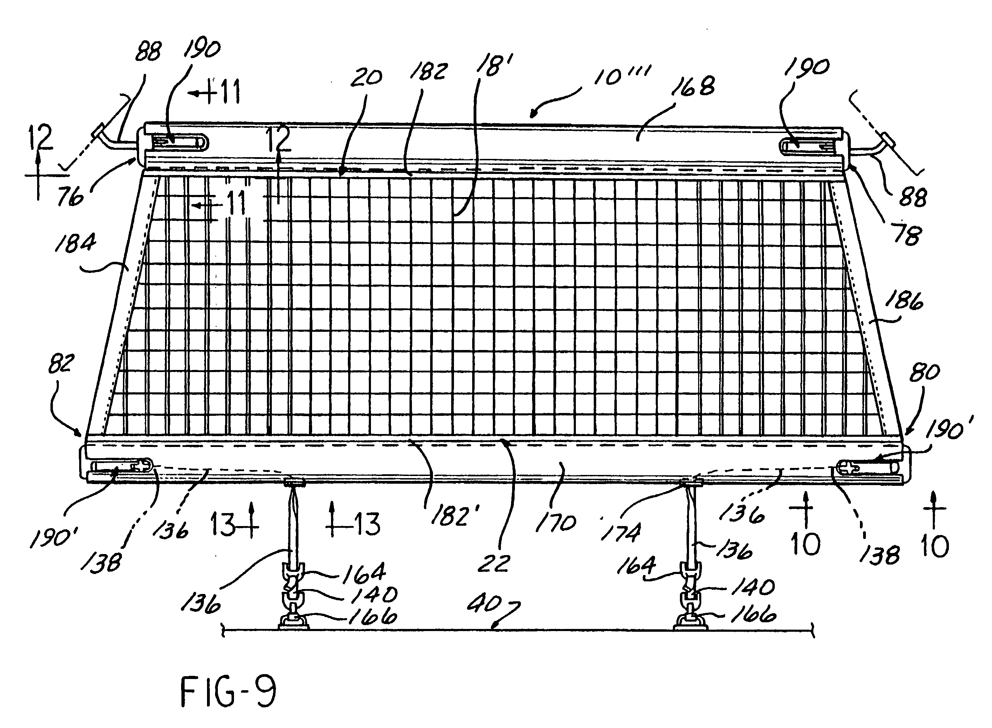

Referring now to Fig. 9, a further alternate embodiment of a barrier net in accordance with the invention is designated generally as 10'''. As in the previously described embodiment of the present invention, a netting member 18' extends across the open space extending transversely between a driver's seat and/or passenger seat and the cargo area of the motor vehicle such as a station wagon, hatch back, or sport utility vehicle. It is to be understood that in any of the embodiments shown in Figs. 1, 4 and 9, the netting member may also extend across the open space extending transversely between the driver's seat (first row of seats) and a second row of seats.

As in the previously described embodiment of the present invention, the netting member 18' is generally rectangular, trapezoidal, or any suitable shape and may be made of any suitable material. In the preferred embodiment, however, netting member 18' is formed from polyester, polypropylene or nylon. The netting member 18' may be color coded or color keyed to match the motor vehicle interior.

Netting member 18' further comprises web straps 184, 186 which are sewn, or attached by any other suitable means, to the lateral edges of netting member 18'. Web straps 184, 186 may be formed from any suitable material, however, in the preferred embodiment, is formed from nylon, polypropylene or a polyester woven material.

As can be seen in Fig. 9, the cords forming the vertical warp of the netting member 18' is relatively thin at the center of the net and becomes progressively thicker toward each of the web strap edges 184, 186. This difference in warp cord thickness directs energy due to an impact toward the center of the assembly, which is generally the strongest area. Having the netting cord the thinnest at the center of netting member 18' also allows for greater visibility behind the driver while utilizing the rear view mirror.

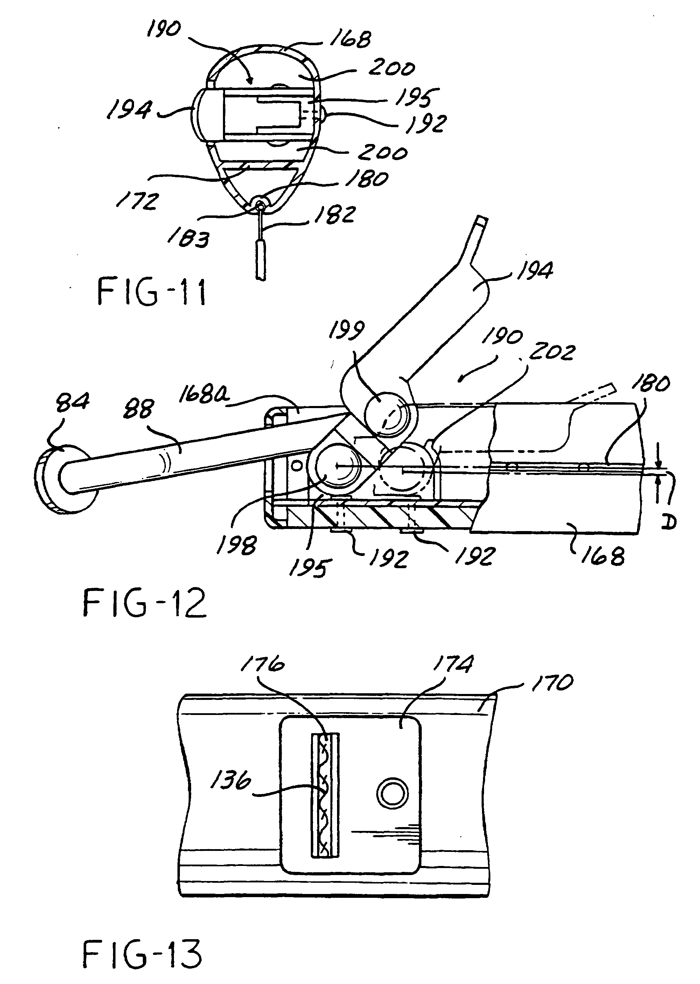

Barrier net 10''' comprises an upper support beam 168 and a lower support beam 170 made of any suitable material, including a polymeric material such as polyvinyl chloride (PVC), aluminum, or steel. In the preferred embodiment, beams 168, 170 are extruded from a suitable aluminum or aluminum alloy material. The beams 168, 170 have a teardrop cross sectional configuration, as best seen in Fig. 11. This teardrop shape provides high structural strength under crash conditions. Further, the beams comprise an internal reinforcement web 172 to strengthen the beams and prevent bending about the X or Y axes of the beam. The outer surfaces of beams 168, 170 may be textured and/or colored to match the interior decor of the vehicle 12.

As best seen in Fig. 11, the upper support beam 168 has a channel-like track 180 extending longitudinally along the downwardly oriented surface thereof. The track 180 is preferably formed integrally with the support beam 168 during the extrusion process. The lower support beam 170 is substantially the mirror image of beam 168, and has a channel-like track identical to that of the upper support beam extending along its upwardly oriented surface.

Netting member 18' has first and second net cords 182 , 182' extending along the upper and lower edges 20, 22 respectively. Each net cord 182, 182' has an enlarged bead 183, 183' (see Fig. 11) of the correct diameter to slide into tracks 180, 180' on beams 168,170 respectively, thereby securely retaining the netting member 18' in connection with the upper and lower support beams along the entire length of the upper and lower net edges. Net cords 182, 182' are formed from a suitable material so as to absorb a predetermined amount of energy during a collision of the motor vehicle. In the preferred embodiment, the beads 183, 183' are monofilament cord approximately two to five millimeters in diameter.

A netting member-to-cargo area attaching means is disposed at either end of upper support beam 168 to hold the upper corners 76,78 of the barrier net adjacent the interior roof (not shown) and above the window 62. As best seen in Fig. 12, the attaching means for the upper corners comprise male projections 88 extending from the ends of the support beam 168 and matingly engageable with female coupling members (not shown) secured to the vehicle interior at respective locations. The female coupling members are preferably generally similar to those depicted in Figs. 2A and 6A, having key slots for receiving flange-like ends 84 of the male projections 88.

The male projection 88 at either end of the beam 168 is attached to an over-center lever mechanism 190, one of which is contained within each opposite end of upper support beam 168. Lever mechanism 190 comprises a base 195 , and a locking arm 194 pivotally mounted to the base by a first clevis pin 198. The base 195 is fastened within the upper support beam 168 by, for example, rivets 192. This fastening means may also be screws, nuts and bolts, or any other suitable and desired fastening means. The end of the male projection 88 is pivotally connected with the locking arm by a second clevis pin 199. The locking arm 194 projects through a rectangular window 168a in the wall of the support beam 168, and movement of the locking arm from the raised and open position to the down and closed position (shown in phantom lines in Fig. 12) draws the male projection inwardly along the longitudinal axis of the support beam 168, effectively shortening the overall length of the beam/male member assembly. When the male projections 88 are inserted into their respective female coupling members and lever mechanisms 190 at both upper corners 76,78 are then moved to the closed positions, tension is applied to male projections 88, thereby securely locking upper beam 168 into place.

When the locking arm 194 is in the closed position the centers of clevis pins 198,199 are offset by a predetermined distance D (see Fig. 12) to promote a positive lock under high stress. This predetermined offset may be any distance as necessary or desired, however, in the preferred embodiment, the distance D is about 4 mm. Locking arm 194 may be made of any suitable material, including metal, a polymeric material or a centipreme material.

As best seen in Fig. 11, an energy absorbing crush zone 200 comprising a void space of a predetermined amount (in the preferred embodiment, about 1 mm) extends on either side of lever mechanism 190. This crush zone allows the support beam 168 to deform somewhat during an impact without damaging the lever mechanism. The support beam 168 also provides structural support to lever 190 when high outward pressure is exerted. Lever mechanism 190 further comprises a snap fit positive lock member 202 which aids in keeping locking arm 194 from inadvertently leaving the closed position, and also aids in preventing undesirable rattling of lever 190 during vehicle travel. It is also possible for the male projection at one or both ends of the upper support beam to be directly and immovably fastened to support beam 168, with no lever mechanism. This may be achieved by any conventional means, such as a suitable fastener (a screw, bolt, pin, or the like) through the male member and the support beam.

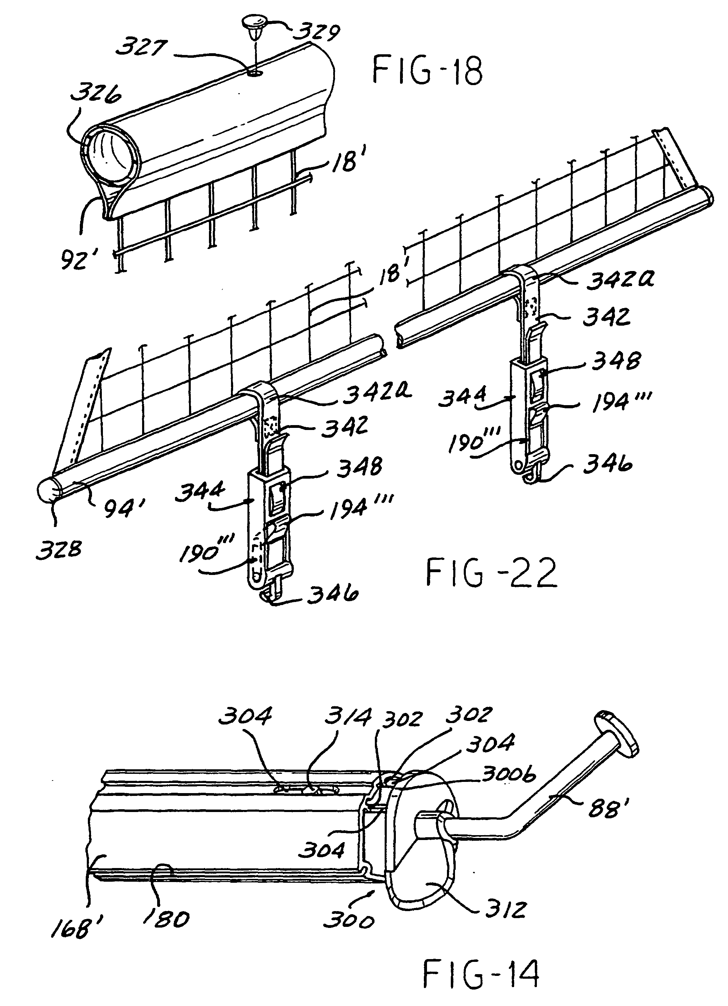

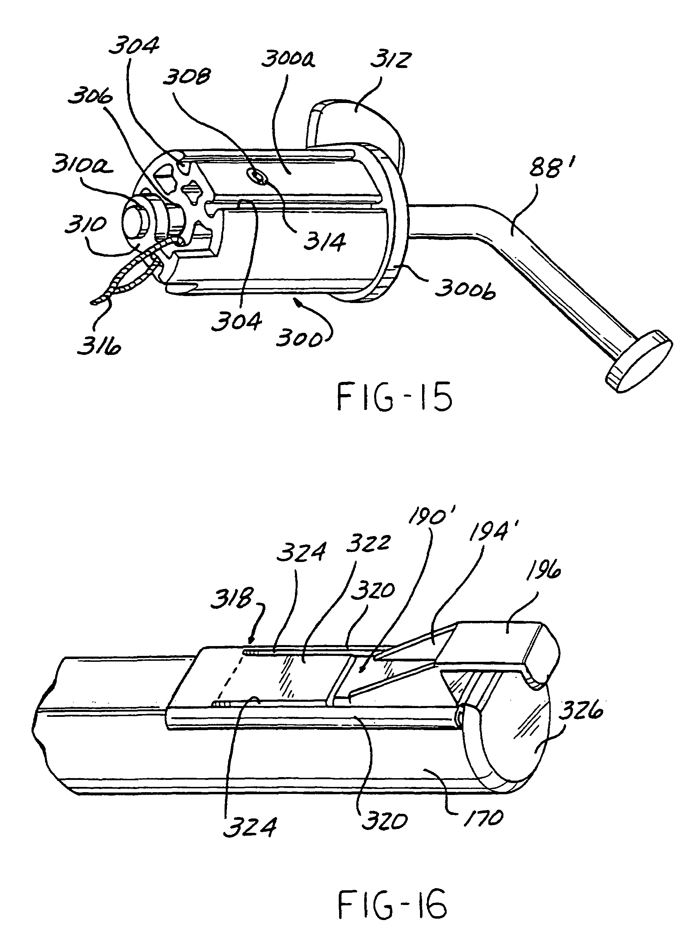

An alternate embodiment of a taut rendering means for the upper portion of a net member 18' in accordance with the invention is shown in Figs. 14 and 15, wherein either and/or both of the upper corners of the load retaining barrier have a male projection 88' attached to an end plug 300 which is slidingly received in the end of the support beam 168'. In the embodiment shown in Fig. 14, the support beam 168' is teardrop shaped in external configuration and has a track 180 extending along its outer surface, similar to that shown in the embodiment of Figs. 9, 12 and 13. A pair of short, parallel stiffener ribs 302 are formed integrally with the support beam 168' and extend along the longitudinal axis thereof. A longitudinal slot 304 is formed through the wall of the support beam 168' adjacent the end thereof, and is preferably located between the stiffener ribs.

The end plug 300 is preferably formed from a plastic material and may be formed by any suitable method, such as injection molding. As best seen in Fig. 15, the end plug 300 has a barrel portion 300a of the proper size and shape to fit within the end of the support beam 168', two parallel grooves 304 extending therealong and matching the geometry of the interior ribs 302 of the beam. A central hole 306 extends along the longitudinal axis of the end plug 300 and a locking hole 308 is formed transversely through the barrel portion to intersect the central hole 306. A retaining post 310 extends from one end of the barrel 300a and has a hole 310a aligned with the central hole 306 of the barrel.

An end cap portion 300b projects radiantly outward from the barrel 300a at the end opposite the retaining post 310 to provide a smooth, finished appearance when the end plug 300 is inserted into the end of the beam. A grip tab 312 extends from the end cap portion 300b.

A pin 314 passes through the locking hole 308 in the barrel 300a and through a correspondingly positioned hole in the male projection 88' to hold the male projection in engagement with the end cap 300. The pin 314 projects outwardly past the surface of the barrel 300a on one side thereof and through the slot 304 in the support beam 168' (see Fig. 14), thereby retaining the end cap/male projection assembly in engagement with the support beam but allowing sliding movement of the end cap relative to the beam. The length of the slot 304 limits the amount of axial movement of the end cap 300 relative to the support beam. An elastic cord 316 has a loop formed at an end thereof, and the loop encircles the retaining post 310. The innermost end of the male projection 88' passes through the hole 310a in the retaining post 310 to prevent the loop from slipping off of the post 310.

In a preferred embodiment of the invention, both ends of the support beam 168' have end caps 300 and male projections 88' as described above and the elastic cord 316 engages the retaining posts 310 of both end caps. When unstretched, the elastic cord 316 is shorter than the length of the support beam 168' so that when the elastic cord 316 is engaged with both of the end caps 300 the cord is stretched and pulls inwardly on the two end cap/male projection assemblies. The overall length of the support beam 168' is such that one or both of the end caps 300 must be pulled outwardly with respect to the support beam 168' in order to engage the male projections 88' with their mating female coupling members. The elastic cord 316 thus maintains the support beam 168' in tension, thereby maintaining the attached netting member in a taut condition and suppressing any tendency of the support beam to rattle.

The barrier net 10''' shown in Fig. 9 has a taut rendering means associated with the lower support beam 170 comprising at least one strap 136 having an upper end 138 attached to an over-center lever mechanism 190' (described in detail hereinbelow) disposed on the lower support beam 170. A lower end 140 of the strap is attached to the cargo floor 40 via any suitable attachment means, such as, for example, a single bar tension lock 164 and a snaphook 166. The tension lock 164 may be utilized to shorten the strap 136 and thereby draw the lower support beam 170 downwardly until the netting member 10''' is taut. It is to be understood that this strap shortening means may comprise any suitable means. Any number of straps 136 may be used as desired and/or necessitated by a particular end use, but in the preferred embodiment two straps 136 are used.

As seen in Fig. 10, lever mechanism 190' is substantially identical in overall configuration as that shown in Fig. 12 discussed above, except that the strap end 138 is attached to the clevis pin 199 so that as locking arm 194 is moved to the closed position (shown in phantom lines in Fig. 10), strap 136 is drawn tight, thereby securing lower support beam 170 and netting member 18' to the floor of the vehicle and rendering the bottom of netting member 18' taut.

Referring now to Fig. 13, each of the holes in the bottom of lower beam 170 through which the straps 136 pass is fitted with a plastic grommet 174. The grommet 174 defines an inlet slot 176 having smooth surfaces to help prevent cutting or fraying of the strap 136 passing therethrough.

An alternative embodiment of a taut rendering means for the lower portion of the net member 18' is shown in Fig. 16. A lever mechanism 190' is structurally and functionally similar to that shown in Fig. 10, but the locking arm 194' has a grip tab 196 extending past the end of the support beam 170 so that it may easily be gripped and actuated. A cover 318, preferably formed on a plastic or hard rubber material, is fitted into a window in.the support beam 170 through which the locking arm 194' extends. The cover 318 protects and hides from view the portion of the lever mechanism 190' located within the support beam 170. The cover 318 comprises two parallel rails 320 which engage the edges of the support beam defining the window, and a flap portion 322 extending,between the rails and separated therefrom by slits 324. The flap. 322 portion is flexible so that it may bend upwardly to permit the locking arm 194'. to pivot to its open position. An end cap 326 is preferably formed from a plastic material and fits into the end of the support beam to provide a neat, finished appearance.

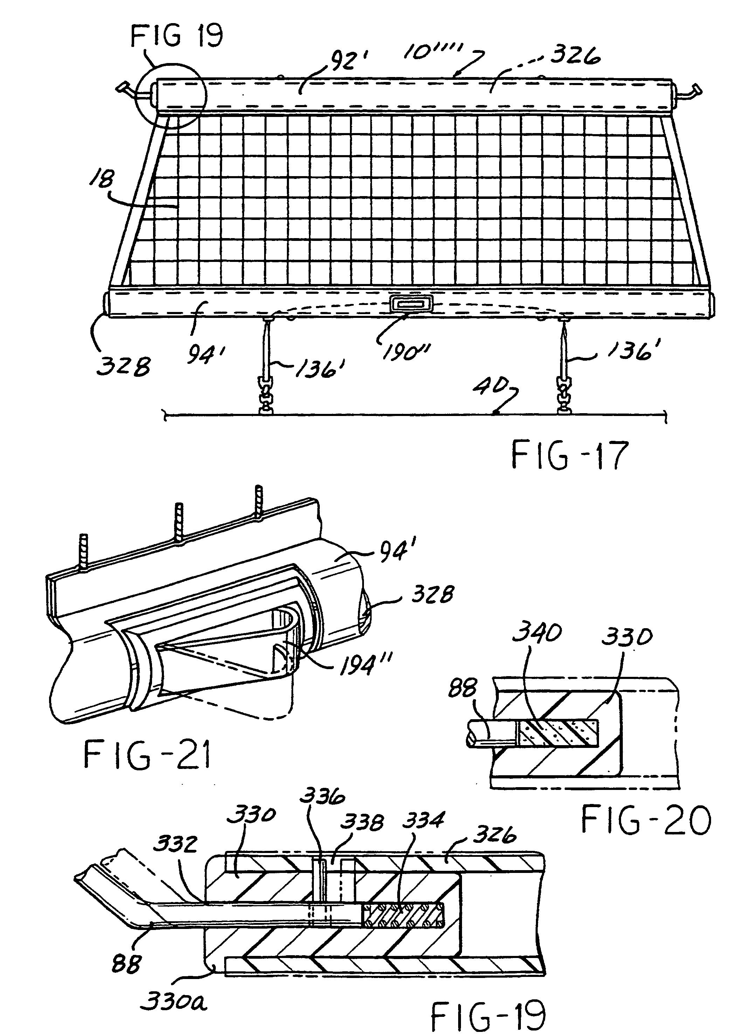

Referring now to Fig. 17, a further alternate embodiment of the barrier net in accordance with the invention is designate generally as 10''''. Upper and lower sleeves 92', 94' are attached to the top and bottom of netting member 18', which may be substantially similar in construction and dimensions to any of the netting member embodiments described hereinabove. The sleeves 92', 94' are securely attached to the netting member 18' and in the preferred embodiment are formed from polyester or nylon web strap, similar to the sleeves described hereinabove in relation to the embodiments of Figs. 1, 2 and 6.

As best seen in Fig. 18, upper and lower support tubes 326, 328 extend through the upper and lower sleeves respectively. Upper and lower support tubes 326,328 are circular in cross section and are preferably formed of aluminum or aluminum alloy to provide high strength while being light in weight. To prevent slippage between the tubes and their respective sleeves, one or more aligned holes 327 may be formed through the sleeves and tubes, and push-in fasteners 329 inserted therethrough.

As seen in Fig. 19, each end of the upper support tube 326 is fitted with a plastic plug 330 which is retained in the end of the tube by a adhesive or mechanical fasteners. A flange 330a extends radially outward at the end of the plug 330 and covers the end of the tube. A blind hole 332 extends inwardly from the outer end of the plug 330 along the axial center line thereof and houses a coil spring 334. A male projection 88 similar to that disclosed in relation to the above-described embodiments is slidingly received in the hole 332. A stop pin 336 is received in a hole 88a drilled transversely through the male projection 88 and extends through a slot 338 formed in both the plug 330 and the wall of the tube 326.

In this embodiment of the attachment means for the upper portion of the net, a male projection 88 at a first end of the upper tube 326 (which may be spring loaded, as shown in Fig. 19, or simply fixed to the tube) is inserted into a female coupling member attached to the vehicle interior, and a spring-loaded male member 88 at the opposite end of the tube is urged inwardly against the force of the coil spring 334 to permit the male projection to be inserted into a second female coupling member. The coil spring 334 is partially compressed when the restraint net is in the installed condition shown in Fig. 17, so that the upper support tube 326 is maintained in compression and is securely retained between the female coupling members on opposite sides of the vehicle.

As seen in Fig. 20, the coil spring may be replaced by a quantity of compressible material 340 such as expanded foam or rubber. This is a simple and inexpensive alternative to the coil spring and eliminates the possibility that the spring will rattle when the vehicle is in motion.

Referring again to Fig. 17, the lower support tube 328 has taut rendering means comprising two straps 136' having upper ends attached to the support tube and lower ends attached to the cargo floor 40 in a manner similar to that described hereinabove in relation to the embodiment of Fig. 9. In Fig. 17, the straps 136' pass through holes formed in the bottom of the lower sleeve 94' and the lower support tube 328 and extend inwardly to engage an over-center lever mechanism 190'' located between the two straps at the approximate center of the lower tube. The lever mechanism 190'' is substantially identical to that shown in Fig. 10, except that both straps 136' are engaged therewith so that actuation of the locking arm 194'' acts to pull on both straps simultaneously, thereby shortening the straps and drawing the barrier net tight. This embodiment of the lower net taut rendering means has the advantage of requiring only a single lever actuation to tighten the net. As seen in Fig. 21, a hole is formed through the lower sleeve and lower support tube so that the lever mechanism may be mounted inside the lower tube and the handle may be accessed through the sleeve. It is also possible for the two straps 136' to be engaged with and tightened by separate lever mechanisms located inboard from the ends of the lower support tube 328.

Fig. 22 depicts yet another alternative tautening mechanism wherein the lower portion of the netting member 18' is sewn or otherwise attached to a lower sleeve 94' containing a lower support beam 328. Upper ends of the straps 342 pass around the lower sleeve 94' and support tube 328, and are sewn securely into loops 342a. The lower end of each strap 342 engages a length adjustment mechanism 344 having a J-hook 346 disposed at its lower end for engagement for an anchor fitting (not shown) secured to the floor of the cargo area. The length adjustment mechanism 344 further comprises a lever mechanism 190''' generally similar in configuration and operation to that disclosed and Fig. 12. The J-hook 346 is attached to locking arm 194''' so that as the locking arm is moved to the closed position, the J-hook is drawn upwardly, thereby reducing the overall length of the strap 342 and attached length adjustment mechanism 344. The lower end of the strap 342 is threaded through a tension lock 348 formed integrally with the length adjustment mechanism 344 to provide for precise adjustment of the strap length.

To install the barrier net in a vehicle, the upper end of the net is first secured to the vehicle using any of the various embodiments of the upper attachment means disclosed hereinabove. Then, with the lever arm 194''' of each length adjusting mechanism 344 in the open position, the J-hooks 346 are engaged with the anchor fittings on the vehicle floor. The free end of the strap 342 is then pulled upward through the tension lock 348 until the strap is snug. When the lever arm 194''' is moved to the closed position, the strap 342 is shortened further to draw the strap and the netting member 18' to a taut condition.

The Fig. 22 embodiment of the invention has several advantages over the other embodiments utilizing shortenable straps as the tautening means. This lower beam 328 is a simple, cylindrical tube with no additional machining or mechanical fittings required. The strap attachment to the sleeve and tube is very simple, and consequently the overall assembly is less expensive to produce.

With any of the embodiments or alternates discussed hereinabove, it is to be understood that any of the attaching means, as well as any suitable alternate means able to restrain predetermined, specified loads, may be used interchangeably at any of the attachment areas (upper and/or lower area of a rear seat, upper and/or lower area of front seat, a cargo area floor, behind the rear and/or front seats, interior trim panels, etc.) and/or in any suitable attachment location. For each of the attaching means, any suitable alternate may be used in light of the following: it is preferred that the attaching means be individually engineered (size, shape, configuration, material (it is to be understood that this is what is meant by the term "engineered plastic" as used herein), process for making, location and attachment means within the vehicle, etc.), dependent upon, for example, their respective locations within the motor vehicle, to meet specified load forces generated in a specific vehicle during a specified impact situation.

For example, one characteristic to be considered during such engineering is the momentum of stowage which would be generated during an impact situation--this momentum would vary, depending upon the initial, pre-impact location of the stowage. As such, this is a characteristic which is considered when determining desired load bearing capabilities of attaching means.

With the net of the present invention as depicted in Figs. 1, 4 and 9, if the stowage weighs between about 10 Kg and about 100 Kg, it should be restrained during frontal impacts up to about 50 km/h, with approximate maximum deflection of the net being about 300 mm or less. However, it is to be understood that these embodiments may also function equally well as a "dog net" (to prevent pets from entering the operator's and/or passenger area) attached behind either the first and/or second row of seats, with no specified restraint characteristics being necessary.

While preferred embodiments of the invention have been described in detail, it will be apparent to those skilled in the art that the disclosed embodiments may be modified. Therefore, the foregoing description is to be considered exemplary rather than limiting, and the true scope of the invention is that defined in the following claims.

## Claims

1. A load retaining barrier net apparatus **(10', 10''' or 10"")** for use with a motor vehicle **(12)** having a cargo area **(14),** a passenger compartment **(16),** an interior roof, windows **(62),** a belt line **(60)**, and at least one of an open space **(74)** extending transversely to the vehicle **(12)** between the cargo area **(14)** and the passenger compartment **(16)** above the belt line **(60),** and an open space extending transversely to the vehicle **(12)** between a first row of seats and a second row of seats above the belt line, the barrier net apparatus **(10', 10''' or 10"")** including a netting member **(18 or 18')** having a top **(20),** a bottom **(22)** and two opposed sides, the apparatus also having first attaching means for removably attaching the top **(20)** of the netting member to the vehicle **(12)** and second attaching means for attaching the bottom **(22)** of the netting member to the vehicle **(12)** with the netting member extending across the at least one open space **(74)** adjacent the belt line **(60),** and means **(98, 146, 136, 136', 190 190', 190'', 300, 316, 334 or 342)** for rendering the netting member taut to block the at least one open space, the first attaching means including a first coupling member **(88 or 88')** and a second coupling member **(88 or 88')**, the first and second coupling members being moveable relative to one another and adapted for engagement with corresponding coupling members **(86)** mountable to the vehicle, the second attaching means including a third coupling member **(88,136 or 136')** and a fourth coupling member **(88,136,136')** moveable with respect to the netting member, **characterized in that**:
a first rigid member **(154, 168, 168' or 326)** supports the top of the netting member, the first coupling member **(88 or 88')** and the second coupling member **(88 or 88')** being located at opposite ends of the first rigid member **(154, 168 or 326)** such that the first rigid member maintains a minimum spacing between the first and second coupling members **(88 or 88')** with respect to one another; and
a second rigid member **(154,170 or 328)** supports the bottom of the netting member, the third and fourth coupling members **(88, 136 or 136')** being engaged with the second rigid member.

2. A load retaining barrier net apparatus **(10''')** as claimed in claim 1, wherein the first rigid member **(168 or 168')** has a track **(180)** formed in an outer surface thereof and extending along a longitudinal axis thereof, and at least one of the top **(20)** and bottom **(22)** of the netting member **(18')** has a bead **(183)** extending along an edge thereof engageable within the track **(180)** to secure the rigid member **(168 or 168')** to the netting member **(18').**

3. A load retaining barrier net apparatus **(10')** as claimed in claim 1, wherein at least one sleeve **(92 or 94)** is attached to and extends along at least one of the top **(20)** and bottom **(22)** of the netting member **(18),** and the corresponding rigid member **(154)** is positioned within the sleeve **(92 or 94).**

4. A load retaining barrier net apparatus **(10', 10''' or 10"")** as claimed in any one of claims 1 to 3, wherein the first attaching means further comprises:
means **(98, 190, 316, 334, or 340)** for moving at least one of the first and second coupling members **(88 or 88')** relative to the first rigid member **(154, 168, 168' or 326).**

5. A load retaining barrier net apparatus **(10', 10''' or 10"")** as claimed in claim 4, wherein the means for moving the coupling member **(88 or 88')** further comprises:
biasing means **(98, 316, 334 or 340)** operably disposed between the first rigid member **(154, 168' or 326)** and the coupling member **(88 or 88')** for urging the coupling member **(88 or 88')** along a longitudinal axis of the first rigid member **(154, 168' or 326).**

6. A load retaining barrier net apparatus **(10"")** as claimed in claim 5, wherein the biasing means **(340)** comprises a compressible material **(340)** urging the coupling member **(88)** outwardly with respect to the first rigid member **(326).**

7. A load retaining barrier net apparatus **(10"")** as claimed in claim 5, wherein the biasing means **(334)** comprises a coil spring **(334)** urging the coupling member **(88)** outwardly with respect to the first rigid member **(326)**.

8. A load retaining barrier net apparatus **(10')** as claimed in claim 5, wherein the biasing means **(107)** comprises a coil spring **(107)** urging the coupling member **(88)** inwardly with respect to the first rigid member **(154).**

9. A load retaining barrier net apparatus as claimed in claim 5, wherein the biasing means **(316)** comprises an elastic cord **(316)** urging the coupling member **(88)** inwardly with respect to the rigid member **(168').**

10. A load retaining barrier net apparatus **(10''' or 10"")** as claimed in claim 1, wherein the first attaching means further comprises:
a pin **(314 or 336)** engageable with the coupling member **(88' or 88)** and extending at least partially transverse with respect to the longitudinal axis of the corresponding rigid member **(168' or 326 );** and
the rigid member **(168' or 326)** having an aperture **(304 or 338)**
wherein the pin **(314 or 336)** is positionable in the aperture and moveable between at least two positions to define limits of movement of the coupling member **(88' or 88)** with respect to the corresponding rigid member **(168' or 326).**

11. A load retaining barrier net apparatus **(10''')** as claimed in claim 4, wherein the means for moving the coupling member **(88)** further comprises:
an over-center lever mechanism **(190)** including a locking arm **(194)** operatively attached to the coupling member **(88)** for moving the coupling member **(88)** in response to movement of the locking arm **(194).**

12. A load retaining barrier net apparatus **(10"')** as claimed in claim 11, wherein the over-center lever mechanism further comprises:
a base **(195)** positionable interior of the corresponding rigid member **(168),** wherein the locking arm **(194')** is engageable with the base **(195)** and projects through a window **(168a)** defined by the corresponding rigid member **(168).**

13. A load retaining barrier net apparatus **(10'''** or **10'''')** as claimed in any previous claim, wherein at least one of the third and fourth coupling members further comprises:
at least one strap **(136, 136' or 342)** having a first end attached to the second rigid member **(170 or 328)** and a second end attachable to the floor of the cargo area; and
means **(190', 190" or 190''')** for shortening the at least one strap **(136, 136' or 342)** to draw the second rigid member **(170 or 328)** toward the floor.

14. A load retaining barrier net **(10''' or 10"")** as claimed in claim 13, wherein the means **(190', 190" or 190''')** for shortening the at least one strap **(136, 136' or 342)** further comprises:
at least one over-center lever mechanism **(190', 190'' or 190''')** having a locking arm **(194, 194', 194" or 194''')** operatively attached to the strap for retracting the strap **(136, 136' or 342)** in response to movement of the locking arm **(194,194', 194" or 194''')** to a closed position.

15. A load retaining barrier net as claimed in claim 14, wherein the at least one over-center lever mechanism **(190''')** is spaced from the second rigid member **(328).**

16. A load retaining barrier net **(10'" or 10"")** as claimed in claim 15, wherein the at least one over-center lever mechanism **(190''')** is engaged with the strap at a point below the second rigid member **(328)** and above the vehicle floor **(40).**

17. A load retaining barrier net **(10''')** as claimed in claim of claim 14, wherein the at least one over-center lever mechanism **(190')** is disposed adjacent an end of the rigid member **(170).**

18. A load retaining barrier net (10"") as claimed in claim 14, wherein the at least one strap (136') further comprises:
first and second straps **(136')** attached to the second rigid member **(328)** at spaced apart locations, wherein the at least one over-center lever mechanism **(190")** is attached to the rigid member **(328)** at a position between the first and second straps **(136'),** and the at least one over-center lever mechanism **(190")** is operatively attached to the first and the second straps **(136')** so that actuation of the locking arm **(194")** retracts both the first and the second straps **(136')** simultaneously.

19. A load retaining barrier net **(10''' or 10"")** as claimed in claim 18, wherein the at least one over-center lever mechanism **(190")** is disposed substantially centered with respect to the second rigid member **(328)**.

20. A load retaining barrier net **(10')** as claimed in claim 1, wherein at least one of the first and second attaching means comprises:
at least one energy absorbing cord **(146)** extending longitudinally within one of the rigid members **(154),** opposite ends of the cord **(146)** operably attached to corresponding coupling members **(88).**

21. A load retaining barrier net **(10')** as claimed in claim 20, wherein at least one of the rigid members **(154)** further comprises:
a guide member **(154)** extending longitudinally through the sleeve **(92 or 94);**
at least one radially inwardly projecting positioning web **(156)** integrally formed with the guide member **(154);** and
an inner housing **(158)** integrally formed with the at least one positioning web **(156),** the inner housing **(158)** for positioning a spring loaded tension apparatus **(98)** and a cord **(146).**

22. A load retaining barrier net **(10', 10''' or 10'''')** as claimed in any previous claim, wherein the netting member **(18 or 18')** comprises a lightweight, resilient and strong synthetic material selected from the group consisting of coated polyesters, multifilament polypropylenes, nylons, and mixtures thereof.

23. A load retaining barrier net **(10' ,10''' or 10'''')** as claimed in any one of claims 1 to 21, wherein the netting member **(18 or 18')** comprises a flexibly rigid, extruded polymeric material.

24. A load retaining barrier net (10') as claimed in claim 20, wherein the energy absorbing cord **(146)** comprises at least two strands **(150,152).**

25. A load retaining barrier net **(10')** as claimed in claim 20 or claim 24, wherein the energy absorbing cord **(146)** is formed from metal wire.

26. A load retaining barrier net **(10', 10''' or 10"")** as claimed in claim 1, further comprising:
the netting member **(18')** including two sleeves **(92, 94),** one sleeve **(92)** attached to the netting member top **(20),** and the other **(94)** attached to the netting member bottom, the rigid members **(168,170)** individually positionable in the respective sleeves **(92, 94);**
each of the first and second attaching means located at corresponding comers **(76, 78, 80, 82)** of the netting member **(18'),** the two upper comers **(76, 78)** being adjacent the interior roof and above the window **(62),** and the two lower comers **(80, 82)** being located at the belt line **(60),** wherein each of the first and second attaching means includes matingly engageable coupling members, one coupling member being a male projection **(88)** disposed at each netting member comer **(76, 78, 80, 82),** and the other coupling member being a female portion **(86)** disposed at the respective motor vehicle location; and
including two multiple-strand **(150, 152),** tightly wound energy absorbing metal wire cords **(46),** each cord having opposed ends, each cord longitudinally extending within one of the sleeves**(92, 94)** and the corresponding rigid members **(168, 170),** and four spring loaded tension apparatuses **(98),** each tension apparatus **(98)** operatively attached at one end to a cord **(46)** end, and at the other end to the corresponding male projection **(88).**

27. A load retaining barrier net **(10''')** as claimed in claim 14, wherein the at least one strap **(136)** further comprises:
first and second straps **(136)**, and wherein the shortening means further comprises:
first and second over-center lever mechanisms **(190')** attached to each opposed end of the second rigid member **(170),** each of the over-center lever mechanisms **(190')** having a locking arm **(194)**, each locking arm **(194)** being operatively attached to the one of the first and second straps **(136)**,
wherein when the locking arms **(194)** are in a closed position, the netting member **(18')** is rendered taut.

28. A load retaining barrier net **(10''' or 10"")** as claimed in claim 1, further comprising:
each of the first and second coupling members **(88)** include first and second pairs of matingly engageable coupling members disposed at opposite ends of the first rigid member **(168, 168' or 326),** each pair of coupling members including a male projection **(88)** secured to the respective end of the first rigid member **(168, 168' or 326)** and a female portion **(86)** attachable to the motor vehicle **(12)** at a corresponding location and for receiving the respective male projection **(88);** and
each of the third and fourth coupling members **(136 or 136')** include first and second straps **(136 or 136')** having respective first ends**(138)** operably engaged with respect to the second rigid member **(170 or 328)** and respective second ends **(140)** attachable to a floor **(40)** of the cargo area **(14),** and means for retracting **(190' or 190'')** the first and second straps **(136 or 136')** for urging the second rigid member **(170 or 328)** toward the floor **(40).**

29. A load retaining barrier net **(10', 14''' or 10"")** as claimed in any previous claim, wherein the netting member **(18')** has a mesh size between about 1 mm and about 2 mm.

30. A load retaining barrier net **(10''')** as claimed in claim 1, wherein the first attaching means further comprises:
a plug **(300)** slidingly receivable with respect to the first rigid member **(168'),** wherein the plug **(300)** includes at least one groove **(304)** and the first rigid member **(168')** includes at least one rib **(302)** extending toward an interior of the rigid member **(168'),** wherein the at least one rib **(302)** is positionable in the at least one groove **(304)** when the first rigid member **(168')** slidably receives the plug **(300).**

## Patentansprüche

1. Lastrückhalte-Sperrnetzvorrichtung (10', 10'' oder 10"") zum Gebrauch mit einem Kraftfahrzeug (12) mit einem Ladebereich (14), einem Passagierraum (16), einem Innendach, Fenstern (62), einer Gürtellinie (60) und wenigstens einem offenen Raum, nämlich einem offenen Raum (74), der sich quer zum Fahrzeug (12) zwischen dem Ladebereich (14) und dem Passagierraum (16) oberhalb der Gürtellinie (60) erstreckt, und/oder einem offenen Raum, der sich quer zum Fahrzeug (12) zwischen einer ersten Sitzreihe und einer zweiten Sitzreihe oberhalb der Gürtellinie erstreckt, wobei die Sperrnetzvorrichtung (10' 10''' oder 10"") ein Netzelement (18 oder 18') mit einer Oberseite (20), einer Unterseite (22) und zwei gegenüberliegenden Seiten einschließt, die Vorrichtung außerdem erste Befestigungsmittel zum entfernbaren Befestigen der Oberseite (20) des Netzelements an das Fahrzeug (12) und zweite Befestigungsmittel zum Befestigen der Unterseite (22) des Netzelements an das Fahrzeug (12) aufweist, wobei sich das Netzelement über den wenigstens einen offenen Raum (74) angrenzend an die Gürtellinie (60) erstreckt, und Mittel (98, 146, 136, 136', 190, 190', 190", 300, 316, 334 oder 342) zum Spannen des Netzelements aufweist, um den wenigstens einen offenen Raum zu blockieren, wobei das erste Befestigungsmittel ein erstes Kupplungselement (88 oder 88') und ein zweites Kupplungselement (88 oder 88') einschließt, das erste und das zweite Kupplungselement relativ zueinander bewegbar und zur Verbindung mit entsprechenden Kupplungselementen (86) adaptiert sind, die sich ans Fahrzeug montieren lassen, das zweite Befestigungsmittel ein drittes Kupplungselement (88, 136 oder 136') und ein viertes Kupplungselement (88, 136, 136') einschließt, die in Bezug auf das Netzelement bewegbar sind, **dadurch gekennzeichnet, dass**:
ein erstes starres Element (154, 168, 168' oder 326) die Oberseite des Netzelements stützt, das erste Kupplungselement (88 oder 88') und das zweite Kupplungselement (88 oder 88') an gegenüberliegenden Enden des ersten starren Elements (154, 168 oder 326) so positioniert sind, dass das erste starre Element einen Mindestabstand zwischen dem ersten und dem zweiten Kupplungselement (88 oder 88') in Bezug zueinander aufrecht erhält; und
ein zweites starres Element (154, 170 oder 328) die Unterseite des Netzelements stützt, wobei das dritte und das vierte Kupplungselement (88, 136 oder 136') in das zweite starre Element eingreifen.

2. Lastrückhalte-Sperrnetzvorrichtung (10''') nach Anspruch 1, wobei das erste starre Element (168 oder 168') eine Bahn (180) aufweist, die in einer Außenfläche davon geformt ist und sich entlang einer Längsachse davon erstreckt, und wenigstens die Oberseite (20) und/oder die Unterseite (22) des Netzelements (18') einen Wulst (183) aufweist, der sich entlang einem Rand davon erstreckt und in die Bahn (180) eingreifen kann, um das starre Element (168 oder 168') am Netzelement (18') zu befestigen.

3. Lastrückhalte-Sperrnetzvorrichtung (10') nach Anspruch 1, wobei wenigstens eine Muffe (92 oder 94) an wenigstens der Oberseite (20) und/oder der Unterseite (22) des Netzelements (18) befestigt ist und sich daran entlang erstreckt und das entsprechende starre Element (154) in der Muffe (92 oder 94) positioniert ist.

4. Lastrückhalte-Sperrnetzvorrichtung (10', 10''' oder 10'''') nach einem der Ansprüche 1 bis 3, wobei das erste Befestigungsmittel weiter umfasst:
Mittel (98, 190, 316, 334 oder 340) zum Bewegen wenigstens des ersten und/oder des zweiten Kupplungselements (88 oder 88') relativ zum ersten starren Element (154, 168, 168' oder 326).

5. Lastrückhalte-Sperrnetzvorrichtung (10', 10''' oder 10"") nach Anspruch 4, wobei das Mittel zum Bewegen des Kupplungselements (88 oder 88') weiter umfasst:
Vorspannmittel (98, 316, 334 oder 340), die funktionsfähig zwischen dem ersten starren Element (154, 168' oder 326) und dem Kupplungselement (88 oder 88') angeordnet sind, um das Kupplungselement (88 oder 88') entlang einer Längsachse des ersten starren Elements (154, 168' oder 326) zu drängen.

6. Lastrückhalte-Spermetzvorrichtung (10'''') nach Anspruch 5, wobei das Vorspannmittel (340) ein zusammendrückbares Material (340) umfasst, welches das Kupplungselement (88) in Bezug auf das erste starre Element (326) nach außen drängt.

7. Lastrückhalte-Sperrnetzvorrichtung (10'''') nach Anspruch 5, wobei das Vorspannmittel (334) eine Spiralfeder (334) umfasst, die das Kupplungselement (88) in Bezug auf das erste starre Element (326) nach außen drängt.

8. Lastrückhalte-Spermetzvorrichtung (10') nach Anspruch 5, wobei das Vorspannmittel (107) eine Spiralfeder (107) umfasst, die das Kupplungselement (88) in Bezug auf das erste starre Element (154) nach innen drängt.

9. Lastrückhalte-Sperrnetzvorrichtung nach Anspruch 5, wobei das Vorspannmittel (316) eine elastische Schnur (316) umfasst, die das Kupplungselement (88) in Bezug auf das starre Element (168') nach innen drängt.

10. Lastrückhalte-Sperrnetzvorrichtung (10''' oder 10"") nach Anspruch 1, wobei das erste Befestigungsmittel weiter umfasst:
einen Stift (314 oder 336), der in das Kupplungselement (88' oder 88) eingreifen kann und sich wenigstens teilweise quer in Bezug auf die Längsachse des entsprechenden starren Elements (168' oder 326) erstreckt; und
wobei das starre Element (168' oder 326) eine Öffnung (304 oder 338) aufweist, wobei der Stift (314 oder 336) in die Öffnung platzierbar und zwischen wenigstens zwei Positionen bewegbar ist, um Bewegungsgrenzen des Kupplungselements (88' oder 88) in Bezug auf das entsprechende starre Element (168' oder 326) zu definieren.

11. Lastrückhalte-Sperrnetzvorrichtung (10''') nach Anspruch 4, wobei das Mittel zum Bewegen des Kupplungselements (88) weiter umfasst:
einen Übertotpunkthebelmechanismus (190) einschließlich eines Verriegelungsarms (194), der funktionsfähig am Kupplungselement (88) befestigt ist, um das Kupplungselement (88) als Reaktion auf die Bewegung des Verriegelungsarms (194) zu bewegen.

12. Lastrückhalte-Spermetzvorrichtung (10''') nach Anspruch 11, wobei der Übertotpunkthebelmechanismus weiter umfasst:
eine Basis (195), die sich im Innem des entsprechenden starren Elements (168) positionieren lässt, wobei sich der Verriegelungsarm (194') mit der Basis (195) in Eingriff bringen lässt und durch ein Fenster (168a) ragt, das durch das entsprechende starre Element (168) definiert ist.

13. Lastrückhalte-Sperrnetzvorrichtung (10''' oder 10"") nach einem der vorherigen Ansprüche, wobei wenigstens das dritte und/oder das vierte Kupplungselement weiter umfasst:
wenigstens einen Gurt (136, 136' oder 342) mit einem am zweiten starren Element (170 oder 328) befestigten ersten Ende und einem zweiten Ende, das sich am Boden des Ladebereichs befestigen lässt; und
Mittel (190', 190" oder 190"') zum Verkürzen des wenigstens einen Gurts (136, 136' oder 342), um das zweite starre Element (170 oder 328) in Richtung des Bodens zu ziehen.

14. Lastrückhaltesperrnetz (10''' oder 10"") nach Anspruch 13, wobei das Mittel (190', 190" oder 190"') zum Verkürzen des wenigstens einen Gurts (136, 136' oder 342) weiter umfasst:
wenigstens einen Übertotpunkthebelmechanismus (190', 190" oder 190''') mit einem Verriegelungsarm (194, 194', 194" oder 194'''), der funktionsfähig am Gurt befestigt ist, um den Gurt (136, 136' oder 342) als Reaktion auf die Bewegung des Verriegelungsarms (194, 194', 194" oder 194''') in eine geschlossene Position zurückzuziehen.

15. Lastrückhaltesperrnetz nach Anspruch 14, wobei der wenigstens eine Übertotpunkthebelmechanismus (190''') in einem Abstand vom zweiten starren Element (328) angeordnet ist.

16. Lastrückhaltesperrnetz (10''' oder 10"") nach Anspruch 15, wobei der wenigstens eine Übertotpunkthebelmechanismus (190"') mit dem Gurt an einem Punkt unterhalb des zweiten starren Elements (328) und über dem Fahrzeugboden (40) in Eingriff ist.

17. Lastrückhaltesperrnetz (10''') nach Anspruch 14, wobei der wenigstens eine Übertotpunkthebelmechanismus (190') angrenzend an ein Ende des starren Elements (170) angeordnet ist.

18. Lastrückhaltesperrnetz (10''') nach Anspruch 14, wobei der wenigstens eine Gurt (136') weiter umfasst:
erste und zweite Gurte (136'), die am zweiten starren Element (328) an mit Zwischenraum angeordneten Stellen befestigt sind, wobei der wenigstens eine Übertotpunkthebelmechanismus (190") am starren Element (328) an einer Position zwischen den ersten und zweiten Gurten (136') befestigt ist und der wenigstens eine Übertotpunkthebelmechanismus (190") funktionsfähig an den ersten und zweiten Gurten (136') so befestigt ist, dass der Verriegelungsarm (194") sowohl die ersten als auch die zweiten Gurte (136') gleichzeitig zurückzieht.

19. Lastrückhaltesperrnetz (10'" oder 10"") nach Anspruch 18, wobei der wenigstens eine Übertotpunkthebelmechanismus (190') im Wesentlichen zentrisch in Bezug auf das zweite starre Element (328) angeordnet ist.

20. Lastrückhaltesperrnetz (10') nach Anspruch 1, wobei wenigstens das erste und/oder das zweite Befestigungsmittel umfasst:
wenigstens eine Energie absorbierende Schnur (146), die sich in Längsrichtung in einem der starren Elemente (154) erstreckt, wobei entgegengesetzte Enden der Schnur (146) funktionsfähig am entsprechenden Kupplungselement (88) befestigt sind.

21. Lastrückhaltespermetz (10') nach Anspruch 20, wobei wenigstens eins der starren Elemente (154) weiter umfasst:
ein Führungselement (154), das sich in Längsrichtung durch die Muffe (92 oder 94) erstreckt;
wenigstens einen, radial nach innen ragenden Positioniersteg (156), der integral mit dem Führungselement (154) geformt ist; und
ein Innengehäuse (158), das integral mit dem wenigstens einen Positioniersteg (156) geformt ist, wobei das Innengehäuse (158) dem Positionieren einer federbelasteten Spannvorrichtung (98) und einer Schnur (146) dient.

22. Lastrückhaltesperrnetz (10', 10''' oder 10'''') nach einem der vorherigen Ansprüche, wobei das Netzelement (18 oder 18') ein leichtes, elastisches und festes Kunststoffmaterial umfasst, das aus der Gruppe ausgewählt wurde, die aus beschichteten Polyestern, Multifilament-Polypropylenen, Nylons und Mischungen daraus besteht.

23. Lastrückhaltesperrnetz (10', 10''' oder 10"") nach einem der Ansprüche 1 bis 21, wobei das Netzelement (18 oder 18') ein biegsam starres, extrudiertes Polymermaterial umfasst.

24. Lastrückhaltesperrnetz (10') nach Anspruch 20, wobei die Energie absorbierende Schnur (146) wenigstens zwei Litzen (150, 152) umfasst.

25. Lastrückhaltesperrnetz (10') nach Anspruch 20 oder Anspruch 24, wobei die Energie absorbierende Schnur (146) aus Metalldraht geformt ist.

26. Lastrückhaltesperrnetz (10', 10''' oder 10"") nach Anspruch 1, weiter umfassend:
das Netzelement (18'), das zwei Muffen (92, 94) einschließt, wobei eine Muffe (92) an der Netzelementoberseite (20) und die andere Muffe (94) an der Netzelementunterseite befestigt ist, wobei die starren Elemente (168, 170) sich individuell in den entsprechenden Muffen (92, 94) positionieren lassen;
wobei sich das erste und das zweite Befestigungsmittel an entsprechenden Ecken (76, 78, 80, 82) des Netzelements (18') befinden, die zwei oberen Ecken (76, 78) an das Innendach angrenzen und über dem Fenster (62) liegen und sich die zwei unteren Ecken (80, 82) an der Gürtellinie (60) befinden, wobei das erste und das zweite Befestigungsmittel ineinander einrastbare Kupplungselemente einschließen, wobei ein Kupplungselement ein Vorsprungsteil (88) ist, das an jeder Netzelementecke (76, 78, 80, 82) angeordnet ist und das andere Kupplungselement ein weibliches Teil (86) ist, das an der entsprechenden Stelle des Kraftfahrzeugs angeordnet ist; und
zwei mehrlitzige (150, 152), fest gewickelte, Energie absorbierende Metalldrahtschnüre (46), wobei jede Schnur gegenüberliegende Enden aufweist, sich jede Schnur in Längsrichtung in einer der Muffen (92, 94) und den entsprechenden starren Elementen (168, 170) erstreckt, und vier federbelastete Spannvorrichtungen (98) einschließt, wobei jede Spannvorrichtung (98) funktionsfähig an einem Ende an einer Schnur (46) und am anderen Ende am entsprechenden Vorsprungsteil (88) befestigt ist.

27. Lastrückhaltesperrnetz (10''') nach Anspruch 14, wobei der wenigstens eine Gurt (136) weiter umfasst:
erste und zweite Gurte (136) und wobei das Verkürzungsmittel weiter umfasst:
erste und zweite Übertotpunkthebelmechanismen (190'), die an den gegenüberliegenden Enden des zweiten starren Elements (170) befestigt sind, wobei jeder der Übertotpunkthebelmechanismen (190') einen Verriegelungsarm (194) aufweist, und jeder Verriegelungsarm (194) funktionsfähig an einen der ersten und zweiten Gurte (136) befestigt ist,
wobei, wenn sich die Verriegelungsarme (194) in einer geschlossenen Position befinden, das Netzelement (18') gestrafft ist.

28. Lastrückhaltesperrnetz (10''' oder 10"") nach Anspruch 1, weiter umfassend:
das erste und das zweite Kupplungselement (88), die erste und zweite Paare ineinander einrastbarer Kupplungselemente einschließen, die an gegenüberliegenden Enden des ersten starren Elements (168, 168' oder 326) angeordnet sind, wobei jedes Paar Kupplungselemente ein Vorsprungsteil (88), das am entsprechenden Ende des ersten starren Elements (168, 168' oder 326) befestigt ist und ein weibliches Teil (86) einschließt, das sich am Kraftfahrzeug (12) an einer entsprechenden Stelle und zur Aufnahme des entsprechenden Vorsprungsteils (88) befestigen lässt; und
das dritte und das vierte Kupplungselement (136 oder 136'), die erste und zweite Gurte (136 oder 136') mit jeweiligen ersten Enden (138), die in Bezug auf das zweite starre Element (170 oder 328) funktionsfähig einrasten und jeweiligen zweiten Enden (140), die sich an einen Boden (40) des Ladebereichs (14) befestigen lassen und Mittel (190' oder 190") zum Zurückziehen der ersten und zweiten Gurte (136 oder 136') einschließen, um das zweite starre Element (170 oder 328) in Richtung des Bodens (40) zu drängen.

29. Lastrückhaltesperrnetz (10', 10''' oder 10"") nach einem der vorherigen Ansprüche, wobei das Netzelement (18') eine Maschengröße zwischen ca. 1 mm und ca. 2 mm hat.

30. Lastrückhaltesperrnetz (10''') nach Anspruch 1, wobei das erste Befestigungsmittel weiter umfasst:
einen Stöpsel (300), der sich in Bezug auf das erste starre Element (168') gleitend aufnehmen lässt, wobei der Stöpsel (300) wenigstens eine Nut (304) einschließt und das erste starre Element (168') wenigstens eine Rippe (302) einschließt, die sich in Richtung eines Innenteils des starren Elements (168') erstreckt, wobei die wenigstens eine Rippe (302) in der wenigstens einen Nut (304) positioniert werden kann, wenn das erste starre Element (168') den Stöpsel (300) gleitend aufnimmt.

## Revendications

1. Appareil à filet de retenue d'une charge (10', 10''' ou 10"") pour une utilisation avec un véhicule à moteur (12) muni d'une zone de chargement (14), d'un compartiment passagers (16), d'un toit intérieur, de fenêtres (62), d'une ligne de ceinture (60), et d'au moins un espace, soit un espace ouvert (74) s'étendant transversalement au véhicule (12) entre la zone de chargement (14) et le compartiment passagers (16) au-dessus de la ligne de ceinture (60) et/ou un espace ouvert s'étendant transversalement au véhicule (12) entre une première rangée de sièges et une deuxième rangée de sièges au-dessus de la ligne de ceinture, appareil à filet de retenue (10', 10''' ou 10"") incorporant un organe de filet (18 ou 18') possédant un haut (20), un bas (22) et deux côtés opposés, appareil possédant aussi un premier moyen d'attache pour attacher d'une manière détachable le haut (20) de l'organe de filet au véhicule (12) et un deuxième moyen d'attache pour attacher le bas (22) de l'organe de filet au véhicule (12) avec l'organe de filet s'étendant à travers ledit au moins un espace ouvert (74) adjacent à la ligne de ceinture (60), et un moyen (98, 146, 136, 136', 190, 190', 190", 300, 316, 334 ou 342) pour tendre l'organe de filet afin que celui-ci bloque ledit au moins un espace ouvert, le premier moyen d'attache incorporant un premier organe d'accouplement (88 ou 88') et un deuxième organe d'accouplement (88 ou 88'), les premier et deuxième organes d'accouplement pouvant être déplacés l'un par rapport à l'autre et adaptés pour se mettre en prise avec les organes d'accouplement correspondants (86) pouvant être montés sur le véhicule, et le deuxième moyen d'attache incorporant un troisième organe d'accouplement (88, 136 ou 136') et un quatrième organe d'accouplement (88, 136, 136') pouvant être déplacés par rapport à l'organe de filet, **caractérisé en ce que** :
un premier organe rigide (154, 168, 168' ou 326) supporte le haut de l'organe de filet, le premier organe d'accouplement (88 ou 88') et le deuxième organe d'accouplement (88 ou 88') étant situés aux extrémités opposées du premier organe rigide (154, 168 ou 326) de telle sorte que le premier organe rigide maintient un écartement minimum entre les premier et deuxième organes d'accouplement (88 ou 88') l'un par rapport à l'autre ; et
un deuxième organe rigide (154, 170 ou 328) supporte le bas de l'organe de filet, les troisième et quatrième organes d'accouplement (88, 136 ou 136') étant mis en prise avec le deuxième organe rigide.

2. Appareil à filet de retenue d'une charge (10"') tel que revendiqué à la revendication 1, dans lequel le premier organe rigide (168 ou 168') comporte une glissière (180) formée dans une surface extérieure de celui-ci et qui s'étend le long d'un axe longitudinal de celui-ci, et au moins un desdits haut (20) et bas (22) de l'organe de filet (18') a un bourrelet (183) qui s'étend le long d'un bord de celui-ci pouvant se mettre en prise à l'intérieur de la glissière (180) pour fixer l'organe rigide (168 ou 168') à l'organe de filet (18').

3. Appareil à filet de retenue d'une charge (10') tel que revendiqué à la revendication 1, dans lequel au moins un manchon (92 ou 94) est attaché à au moins un desdits haut (20) et bas (22) de l'organe de filet (18) et s'étend le long d'au moins un desdits haut (20) et bas (22) de l'organe de filet (18), et l'organe rigide correspondant (154) est positionné à l'intérieur du manchon (92 ou 94).

4. Appareil à filet de retenue d'une charge (10', 10''' ou 10"") tel que revendiqué dans l'une quelconque des revendications 1 à 3, dans lequel le premier moyen d'attache comprend en outre :
un moyen (98, 190, 316, 334 ou 340) pour déplacer au moins un des premier et deuxième organes d'accouplement (88 ou 88') par rapport au premier organe rigide (154, 168, 168' ou 326).

5. Appareil à filet de retenue d'une charge (10', 10''' ou 10"") tel que revendiqué à la revendication 4, dans lequel le moyen pour déplacer l'organe d'accouplement (88 ou 88') comprend en outre :
un moyen de sollicitation (98, 316, 334 ou 340) disposé d'une manière opérationnelle entre le premier organe rigide (154, 168' ou 326) et l'organe d'accouplement (88 ou 88') pour pousser l'organe d'accouplement (88 ou 88') le long d'un axe longitudinal du premier organe rigide (154, 168' ou 326).

6. Appareil à filet de retenue d'une charge (10"") tel que revendiqué à la revendication 5, dans lequel le moyen de sollicitation (340) comprend un matériau compressible (340) poussant l'organe d'accouplement (88) vers l'extérieur par rapport au premier organe rigide (326).

7. Appareil à filet de retenue d'une charge (10"") tel que revendiqué à la revendication 5, dans lequel le moyen de sollicitation (334) comprend un ressort à boudin (334) poussant l'organe d'accouplement (88) vers l'extérieur par rapport au premier organe rigide (326).

8. Appareil à filet de retenue d'une charge (10') tel que revendiqué à la revendication 5, dans lequel le moyen de sollicitation (107) comprend un ressort à boudin (107) poussant l'organe d'accouplement (88) vers l'intérieur par rapport au premier organe rigide (154).

9. Appareil à filet de retenue d'une charge tel que revendiqué à la revendication 5, dans lequel le moyen de sollicitation (316) comprend un cordon élastique (316) poussant l'organe d'accouplement (88) vers l'intérieur par rapport à l'organe rigide (168').

10. Appareil à filet de retenue d'une charge (10''' ou 10"") tel que revendiqué à la revendication 1, dans lequel le premier moyen d'attache comprend en outre :
une goupille (314 ou 336) pouvant se mettre en prise avec l'organe d'accouplement (88' ou 88) et qui s'étend au moins partiellement transversalement par rapport à l'axe longitudinal de l'organe rigide correspondant (168' ou 326) ; et
l'organe rigide (168' ou 326) étant muni d'une ouverture (304 ou 338) dans lequel la goupille (314 ou 336) peut être positionnée dans l'ouverture et déplacée entre au moins deux positions pour définir les limites de déplacement de l'organe d'accouplement (88' ou 88) par rapport à l'organe rigide correspondant (168' ou 326).

11. Appareil à filet de retenue d'une charge (10''') tel que revendiqué à la revendication 4, dans lequel le moyen de déplacement de l'organe d'accouplement (88) comprend en outre :
un mécanisme à levier à détente brusque (190) incorporant un bras de verrouillage (194) attaché d'une manière opérationnelle à l'organe d'accouplement (88) pour déplacer l'organe d'accouplement (88) en réponse au mouvement du bras de verrouillage (194).

12. Appareil à filet de retenue d'une charge (10"') tel que revendiqué à la revendication 11, dans lequel le mécanisme à levier à détente brusque comprend en outre :
une base (195) pouvant être positionnée à l'intérieur de l'organe rigide correspondant (168), dans lequel le bras de verrouillage (194') peut être mis en prise avec la base (195) et fait saillie à travers une fenêtre (168a) définie par l'organe rigide correspondant (168).

13. Appareil à filet de retenue d'une charge (10''' ou 10"") tel que revendiqué dans l'une quelconque des revendications précédentes, dans lequel au moins un des troisième et quatrième organes d'accouplement comprend en outre :
au moins une patte (136, 136' ou 342) munie d'une première extrémité attachée au deuxième organe rigide (170 ou 328) et une deuxième extrémité pouvant être attachée au plancher de la zone de chargement ; et
un moyen (190', 190" ou 190''') pour raccourcir ladite au moins une patte (136, 136' ou 342) afin de tirer le deuxième organe rigide (170 ou 328) vers le plancher.

14. Filet de retenue d'une charge (10''' ou 10"") tel que revendiqué à la revendication 13, dans lequel le moyen (190', 190" ou 190''') pour raccourcir ladite au moins une patte (136, 136' ou 342) comprend en outre :
au moins un mécanisme à levier à détente brusque (190', 190" ou 190''') muni d'un bras de verrouillage (194, 194', 194" ou 194"') attaché d'une manière opérationnelle à la patte pour rétracter la patte (136, 136' ou 342) en réponse au mouvement du bras de verrouillage (194, 194', 194" ou 194"') vers une position fermée.

15. Filet de retenue d'une charge tel que revendiqué à la revendication 14, dans lequel ledit au moins un mécanisme à levier à détente brusque (190''') est écarté du deuxième organe rigide (328).

16. Filet de retenue d'une charge (10''' ou 10"") tel que revendiqué à la revendication 15, dans lequel ledit au moins un mécanisme à levier à détente brusque (190''') est mis en prise avec la patte à un point situé en dessous du deuxième organe rigide (328) et au-dessus du plancher du véhicule (40).

17. Filet de retenue d'une charge (10''') tel que revendiqué à la revendication 14, dans lequel ledit au moins un mécanisme à levier à détente brusque (190') est disposé à côté d'une extrémité de l'organe rigide (170).

18. Filet de retenue d'une charge (10"") tel que revendiqué à la revendication 14, dans lequel ladite au moins une patte (136') comprend en outre :
les première et deuxième pattes (136') attachées au deuxième organe rigide (328) à des emplacements écartés l'un de l'autre, dans lequel ledit au moins un mécanisme à levier à détente brusque (190") est attaché à l'organe rigide (328) à un emplacement situé entre les première et deuxième pattes (136'), et ledit au moins un mécanisme à levier à détente brusque (190") est attaché d'une manière opérationnelle aux première et deuxième pattes (136') de sorte que l'actionnement du bras de verrouillage (194") rétracte à la fois les première et deuxième pattes (136') simultanément.

19. Filet de retenue d'une charge (10''' ou 10"") tel que revendiqué à la revendication 18, dans lequel ledit au moins un mécanisme à levier à détente brusque (190") est disposé en grande partie centré par rapport au deuxième organe rigide (328).

20. Filet de retenue d'une charge (10') tel que revendiqué à la revendication 1, dans lequel au moins un desdits premier et deuxième moyens d'attache comprend :
au moins un cordon absorbant l'énergie (146) qui s'étend longitudinalement à l'intérieur d'un des organes rigides (154), les extrémités opposées du cordon (146) étant attachées d'une manière opérationnelle aux organes d'accouplement correspondants (88).

21. Filet de retenue d'une charge (10') tel que revendiqué à la revendication 20, dans lequel au moins un des organes rigides (154) comprend en outre :
un organe de guidage (154) s'étendant longitudinalement à travers le manchon (92 ou 94) ;
au moins une âme de positionnement faisant saillie vers l'intérieur radialement (156) formée d'un seul tenant avec l'organe de guidage (154) ; et
un logement intérieur (158) formé d'un seul tenant avec ladite au moins une âme de positionnement (156), le logement intérieur (158) pour positionner un appareil de tension à ressort (98) et un cordon (146).

22. Filet de retenue d'une charge (10', 10''' ou 10"") tel que revendiqué dans l'une quelconque des revendications précédentes, dans lequel l'organe de filet (18 ou 18') comprend un matériau synthétique de poids léger robuste et résilient sélectionné dans le groupe comportant des polyesters enrobés, des polypropylènes multifilaments, des nylons, et des mélanges de ceux-ci.

23. Filet de retenue d'une charge (10', 10''' ou 10"") tel que revendiqué dans l'une quelconque des revendications 1 à 21, dans lequel l'organe de filet (18 ou 18') comprend un matériau polymère extrudé rigide d'une manière flexible.

24. Filet de retenue d'une charge (10') tel que revendiqué à la revendication 20, dans lequel le cordon absorbant l'énergie (146) comprend au moins deux torons (150, 152).

25. Filet de retenue d'une charge (10') tel que revendiqué à la revendication 20 ou la revendication 24, dans lequel le cordon absorbant l'énergie (146) est formé dans du fil métallique.

26. Filet de retenue d'une charge (10', 10'" ou 10"") tel que revendiqué à la revendication 1, comprenant en outre :
l'organe de filet (18') qui incorpore deux manchons (92, 94), un manchon (92) attaché au haut de l'organe de filet (20), et l'autre (94) attaché au bas de l'organe de filet, les organes rigides (168, 170) pouvant être positionnés individuellement dans leurs manchons respectifs (92, 94) ;
chacun des premier et deuxième moyens d'attache situés aux coins correspondants (76, 78, 80, 82) de l'organe de filet (18'), les deux coins supérieurs (76, 78) étant adjacents au toit intérieur et au-dessus de la fenêtre (62), et les deux coins inférieurs (80, 82) étant situés au niveau de la ligne de ceinture (60), dans lequel chacun des premier et deuxième moyens d'attache incorpore des organes d'accouplement pouvant se mettre en prise d'une manière conjuguée, un organe d'accouplement étant une saillie mâle (88) disposée à chaque coin d'organe de filet (76, 78, 80, 82), et l'autre organe d'accouplement étant une portion femelle (86) disposée à l'emplacement du véhicule à moteur respectif ; et
incorporant deux torons multiples (150, 152), des cordons en fil métallique absorbant l'énergie enroulés de manière très serrée (46), chaque cordon ayant des extrémités opposées, chaque cordon s'étendant longitudinalement à l'intérieur d'un des manchons (92, 94) et les organes rigides correspondants (168, 170), et quatre appareils de tension à ressort (98), chaque appareil de tension (98) étant attaché d'une manière opérationnelle au niveau d'une extrémité à une extrémité d'un cordon (46), et au niveau de l'autre extrémité à la saillie mâle correspondante (88).

27. Filet de retenue d'une charge (10"') tel que revendiqué à la revendication 14, dans lequel ladite au moins une patte (136) comprend en outre :
une première et deuxième pattes (136), et dans lequel le moyen de raccourcissement comprend en outre :
un premier et deuxième mécanismes à levier à détente brusque (190') attaché à chaque extrémité opposée du deuxième organe rigide (170), chacun des mécanismes à levier à détente brusque (190') étant muni d'un bras de verrouillage (194), chaque bras de verrouillage (194) étant attaché d'une manière opérationnelle à l'une desdites première et deuxième pattes (136),
dans lequel lorsque les bras de verrouillage (194) sont dans une position fermée, l'organe de filet (18') est alors tendu.

28. Filet de retenue d'une charge (10''' ou 10"") tel que revendiqué à la revendication 1, comprenant en outre :
chacun desdits premier et deuxième organes d'accouplement (88) incorporant une première et deuxième paires d'organes d'accouplement pouvant se mettre en prise d'une manière conjuguée disposés à des extrémités opposées du premier organe rigide (168, 168' ou 326), chaque paire d'organes d'accouplement incorporant une saillie mâle (88) fixée à l'extrémité respective du premier organe rigide (168, 168' ou 326) et une portion femelle (86) pouvant être attachée au véhicule à moteur (12) à un emplacement correspondant et pour recevoir la saillie mâle respective (88) ; et
chacun des troisième et quatrième organes d'accouplement (136 ou 136') incorpore une première et deuxième pattes (136 ou 136') munies des premières extrémités respectives (138) mises en prise d'une manière opérationnelle par rapport au deuxième organe rigide (170 ou 328) et les deuxièmes extrémités respectives (140) pouvant être attachées à un plancher (40) de la zone de chargement (14), et un moyen pour rétracter (190' ou 190") les première et deuxième pattes (136 ou 136') afin de pousser le deuxième organe rigide (170 ou 328) vers le plancher (40).

29. Filet de retenue d'une charge (10', 10''' ou 10"") tel que revendiqué dans l'une quelconque des revendications précédentes, dans lequel l'organe de filet (18') a une taille de maille se situant entre environ 1 mm et environ 2 mm.

30. Filet de retenue d'une charge (10"') tel que revendiqué à la revendication 1,
dans lequel le premier moyen d'attache comprend en outre :
un bouchon (300) qui peut être reçu d'une manière coulissante par rapport au premier organe rigide (168'), dans lequel le bouchon (300) incorpore au moins une rainure (304) et le premier organe rigide (168') incorpore au moins une nervure (302) s'étendant vers un espace intérieur de l'organe rigide (168'), dans lequel ladite au moins une nervure (302) peut être positionnée dans ladite au moins une rainure (304) quand le premier organe rigide (168') reçoit d'une manière coulissante le bouchon (300).
